(19) **Europäisches Patentamt European Patent Office Office européen des brevets**

(11) **EP 4 488 707 A1**

(12) **EUROPEAN PATENT APPLICATION**

(43) Date of publication:
08.01.2025 Bulletin 2025/02

(21) Application number: 24184562.7

(22) Date of filing: 26.06.2024

(51) International Patent Classification (IPC):
G01S 5/02 $^{(2010.01)}$  G01S 13/76 $^{(2006.01)}$

(52) Cooperative Patent Classification (CPC):
G01S 5/0284; G01S 13/765

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 07.07.2023 GB 202310464

(71) Applicant: Nokia Technologies Oy
02610 Espoo (FI)

(72) Inventors:
• BARBU, Oana-Elena
9220 Aalborg (DK)
• VEJLGAARD, Benny
9260 Gistrup (DK)
• HARREBEK, Johannes
9000 Aalborg (DK)
• SVENDSEN, Simon
9000 Aalborg (DK)

(74) Representative: Nokia EPO representatives
Nokia Technologies Oy
Karakaari 7
02610 Espoo (FI)

(54) **AMBIENT-IOT LOCATING AND CALIBRATION**

(57) An apparatus, method and computer program is described comprising: receiving, at a reader device (106) from an activator device (104), a first activation signal directed towards a passive radio apparatus (102); receiving, from the passive radio apparatus (102), at least one first initial reply signal in relation to the first activation signal; transmitting, from the reader device (106), an indication for transmitting a second activation signal; receiving, from said activator device (104), the second activation signal directed towards the passive radio apparatus (102); receiving, from the passive radio apparatus (102), at least one second initial reply signal in relation to the second activation signal; determining, based at least partially on at least one second initial reply signal received from the passive radio apparatus (102), location information related to at least one of a distance between the activator device (104) and the passive radio apparatus (102), and a distance between the reader device (106) and the passive radio apparatus (102); and transmitting the location information related to at least one of the distance between the activator device (104) and the passive radio apparatus (102), and the distance between the reader device (106) and the passive radio apparatus (102).

FIG. 1a

## Description

### Field

Example embodiments may relate to systems, methods and/or computer programs for Ambient-Internet-of-Things (A-IoT) device locating and calibration.

### Background

A passive radio apparatus such as, for example an A-IoT device (or tag), is a passive radio device or apparatus that harnesses energy from wireless signals sent on specific carriers and/or bandwidths and charges a simple circuitry that, once activated, will emit/reflect a reply signal that encodes at least the identity (e.g., ID) of the passive radio apparatus or device. Determining the location of and/or range to an A-IoT device or other passive radio apparatus is a challenging task in any wireless communication network such as, for example a New Radio (NR) network including NR elements such as, without limitation, for example gNodeB (gNB), location management functions (LMF), or user equipment (UEs) in the NR network within which the A-IoT device resides. This is especially so for locating multi-frequency A-IoT devices or passive radio apparatus in an NR network.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described a user equipment comprising: at least one processor; and at least one memory storing instructions that, when executed by the at least one processor, cause the user equipment to at least perform: transmitting, from the user equipment, a first activation signal to a passive radio apparatus; receiving, at the user equipment, an indication for transmitting a second activation signal; transmitting, from the user equipment, the second activation signal to the passive radio apparatus; and receiving, at the user equipment, location information related to at least one of a distance between the user equipment and the passive radio apparatus and a distance between a reader device and the passive radio apparatus based at least partially on the second activation signal.

In some example embodiments, the user equipment further performing: the receiving the location information further comprising receiving, at the user equipment, a first bias range offset associated with at least charging the passive radio apparatus based at least partially on the first activation signal.

In some example embodiments, wherein: the reader device is at least part of the user equipment; the reader device is at least part of another one or more user equipment, and wherein receiving the indication for transmitting the second activation signal, and receiving the location information is received from the another one or more user equipment; or the reader device is at least part of another one or more user equipment, and wherein the receiving the indication for transmitting the second activation signal, and the receiving the location information is received from a base station or network element serving the user equipment and the another one or more user equipment. As an option, the reader device is at least part of a base station or network element.

In some example embodiments, wherein; the transmitting, from the user equipment, the first activation signal to the passive radio apparatus is for at least charging the passive radio apparatus from a first state over a first activation period; and the receiving, at the user equipment, an indication for transmitting a second activation signal is for at least charging the passive radio apparatus from a second state over a second activation period.

In some example embodiments, wherein the location information related to at least one of the distance between the user equipment and the passive radio apparatus, and the distance between the reader device and the passive radio apparatus is determined at least partially based on a time the passive radio apparatus takes to charge from a first state and/or second state before transmitting a reply signal in response to the first activation signal and/or the second activation signal.

In some example embodiments, wherein the location information related to at least one of the distance between the user equipment and the passive radio apparatus, and the distance between the reader device and the passive radio apparatus is determined at least partially based on a time the passive radio apparatus takes to charge from a second state using the second activation signal.

In some example embodiments, wherein the location information is determined based on: first ranging information comprising a sum of at least partially: the distance between the user equipment and the passive radio apparatus, the distance between the reader device and the passive radio apparatus, and a first bias range offset of the passive radio apparatus, the first bias range offset determined based on a time the passive radio apparatus takes to charge from a first state using the first activation signal; and second ranging information comprising a sum of at least partially: the distance between the user equipment and the passive radio apparatus, the distance between the reader device and the passive radio apparatus, and a second bias range offset of the passive radio apparatus, the second bias range offset determined based on a time the passive radio apparatus takes to charge from a second state using the second activation signal.

In some example embodiments, wherein: the first state comprises an unknown charged state of the passive radio apparatus; and the second state comprises a known charged state or a fully discharged state of the passive radio apparatus.

In some example embodiments, prior to the transmitting the first activation signal, further performing: transmitting, from the user equipment to the reader device, information related to at least one of: an indication of a two-stage ranging procedure; a charging time model of the passive radio apparatus for when the passive radio apparatus collects energy from the first activation signal and second activation signal; and a request for the reader device to measure the first activation signal, the measurement of the first activation signal comprising information related to a distance between the user equipment and the reader device.

In some example embodiments, the user equipment further performing: the receiving the indication further comprising receiving, at the user equipment, a configuration comprising at least one resource configured to be used for transmission of the second activation signal to the passive radio apparatus, based at least partially on the first activation signal.

In some example embodiments, wherein the at least one resource of the configuration comprises at least one of: a time for transmission of the second activation signal; a frequency used for transmission of the second activation signal; and an angle of departure for transmission of second activation signal.

According to a second aspect, there is described a user equipment comprising: at least one processor; and at least one memory storing instructions that, when executed by the at least one processor, cause the user equipment to at least perform: receiving, from an activator device, a first activation signal directed towards a passive radio apparatus; receiving, from the passive radio apparatus, at least one first initial reply signal in relation to the first activation signal; transmitting an indication for transmitting a second activation signal; receiving, from said activator device, the second activation signal directed towards the passive radio apparatus; receiving, from the passive radio apparatus, at least one second initial reply signal in relation to the second activation signal; determining, based at least partially on at least one second initial reply signal received from the passive radio apparatus, location information related to at least one of a distance between the activator device and the passive radio apparatus, and a distance between the user equipment and the passive radio apparatus; and transmitting the location information related to at least one of the distance between the activator device and the passive radio apparatus, and the distance between the user equipment and the passive radio apparatus.

In some example embodiments, the user equipment further performing: the transmitting the location information further comprising transmitting a first bias range offset associated with at least charging of the passive radio apparatus based at least partially on the first activation signal.

In some example embodiments, wherein: the activator device is at least part of the user equipment; the activator device is at least part of another user equipment, and wherein transmitting the indication for transmitting the second activation signal, and transmitting the location information is transmitted to the another user equipment; or the activator device is at least part of another user equipment, and wherein transmitting the indication for transmitting the second activation signal, and transmitting the location information is transmitted from a base station or network element serving the user equipment and the another user equipment. As an option, the activator device is at least part of a base station or network element.

In some example embodiments, wherein: the receiving, from the activator device, the first activation signal directed towards the passive radio apparatus is for at least charging the passive radio apparatus from a first state over a first activation period; and the transmitting the indication for transmitting the second activation signal is for at least charging the passive radio apparatus from a second state over a second activation period.

In some example embodiments, wherein determining the location information related to at least one of the distance between the activator device and the passive radio apparatus, and the distance between the user equipment and the passive radio apparatus is determined at least partially based on a time the passive radio apparatus takes to charge from a first state before transmitting said at least one first initial reply signal in response to the first activation signal.

In some example embodiments, wherein the determining the location information related to at least one of the distance between the activator device and the passive radio apparatus, and the distance between the user equipment and the passive radio apparatus is determined at last partially based on a time the passive radio apparatus takes to charge from a second state before transmitting said at least one second initial reply signal in response to the second activation signal.

In some example embodiments, wherein performing the determining of the location information further comprising performing: measuring first ranging information comprising a sum of at least partially: the distance between the user equipment and the passive radio apparatus, the distance between the reader device and the passive radio apparatus, and a first bias range offset of the passive radio apparatus, the first bias range offset determined based on a time the passive radio apparatus takes to charge from a first state using the first activation signal; measuring second ranging information comprising a sum of at least partially: the distance between the user equipment and the passive radio apparatus, the distance between the reader device and the passive radio apparatus, and a second bias range offset of the passive radio apparatus, the second bias range offset determined based on a time the passive radio apparatus takes to charge from a second state using the second activation signal; and determining the location information based on the measured first and second ranging information.

In some example embodiments, further comprising performing: determining, prior to transmitting the indication, that the passive radio apparatus is in the second state or fully discharged after a plurality of first reply signal transmissions in response to the first activation signal ceases.

In some example embodiments, further performing: the transmitting the indication further comprising transmitting a configuration comprising at least one resource configured to be used by the activator device for transmission of the second activation signal to the passive radio apparatus, based at least partially on the first activation signal.

In some example embodiments, further comprising performing: determining at least one resource to be used for transmission of at least one second activation signal to a passive radio apparatus, based at least partially on the at least one first initial reply; transmitting, from the user equipment, a configuration comprising the at least one resource; and wherein the at least one second initial reply from the passive radio apparatus is in response to the second activation signal sent based on the configuration.

In some example embodiments, wherein the at least one resource of the configuration comprises at least one of: a time for transmission of the second activation signal, a frequency used for transmission of the second activation signal, or an angle of departure for transmission of second activation signal.

In some example embodiments of the first or second aspects, wherein the passive radio apparatus comprises one or more from the group of: a passive radio device, an ambient internet of things device, a part of a semi-passive radio device, or a tag.

According to a third aspect, there is described a method for a user equipment comprising: transmitting, from the user equipment, a first activation signal to a passive radio apparatus; receiving, at the user equipment, an indication for transmitting a second activation signal; transmitting, from the user equipment, the second activation signal to the passive radio apparatus; and receiving, at the user equipment, location information related to at least one of a distance between the user equipment and the passive radio apparatus and a distance between a reader device and the passive radio apparatus based at least partially on the second activation signal.

The method of the third aspect may also perform operations according to the operations of any preceding user equipment or apparatus definition of the first aspect.

According to a fourth aspect, there is provided a computer program product comprising a set of instructions which, when executed on an apparatus, is configured to cause the apparatus to carry out the method definition of the third aspect.

According to a fifth aspect, there is described a method for a user equipment comprising: receiving, from an activator device, a first activation signal directed towards a passive radio apparatus; receiving, from the passive radio apparatus, at least one first initial reply signal in relation to the first activation signal; transmitting, from the user equipment, an indication for transmitting a second activation signal; receiving, from said activator device, the second activation signal directed towards the passive radio apparatus; receiving, from the passive radio apparatus, at least one second initial reply signal in relation to the second activation signal; determining, based at least partially on at least one second initial reply signal received from the passive radio apparatus, location information related to at least one of a distance between the activator device and the passive radio apparatus, and a distance between the user equipment and the passive radio apparatus; and transmitting, from the user equipment, the location information related to at least one of the distance between the activator device and the passive radio apparatus, and the distance between the user equipment and the passive radio apparatus.

The method of the fifth aspect may also perform operations according to the operations of any preceding user equipment or apparatus definition of the second aspect.

According to a sixth aspect, there is provided a computer program product comprising a set of instructions which, when executed on an apparatus, is configured to cause the apparatus to carry out the method definition of the fifth aspect.

According to a seventh aspect, there is provided a non-transitory computer readable medium comprising program instructions stored thereon for performing a method, comprising: transmitting, from a user equipment, a first activation signal to a passive radio apparatus; receiving, at the user equipment, an indication for transmitting a second activation signal; transmitting, from the user equipment, the second activation signal to the passive radio apparatus; and receiving, at the user equipment, location information related to at least one of a distance between the user equipment and the passive radio apparatus and a distance between a reader device and the passive radio apparatus based at least partially on the second activation signal.

The program instructions of the seventh aspect may also perform operations according to any preceding method definition of the third aspect.

According to a eighth aspect, there is provided a non-transitory computer readable medium comprising program instructions stored thereon for performing a method, comprising: receiving, from an activator device, a first activation signal directed towards a passive radio apparatus; receiving, from the passive radio apparatus, at least one first initial reply signal in relation to the first activation signal; transmitting, from a user equipment, an indication for transmitting a second activation signal; receiving, from said activator device, the second activation signal directed towards the passive radio apparatus; receiving, from the passive radio apparatus, at least one second initial reply signal in relation to the second activation signal; determining, based at least partially on at least one second initial reply signal received from the passive radio apparatus, location information related to at least one of a distance between the activator device and the passive radio apparatus, and a distance between the user equipment and the passive radio apparatus; and transmitting, from the user equipment, the location information related to at least one of the distance between the activator device and the passive radio apparatus, and the distance between the user equipment and the passive radio apparatus.

The program instructions of the eighth aspect may also perform operations according to any preceding method definition of the fifth aspect.

In a ninth aspect, this specification describes a computer-readable medium (such as a non-transitory computer-readable medium) comprising program instructions stored thereon for performing (at least) any preceding method or apparatus definition as described with reference to any of the first, second, third, fourth, fifth, sixth, seventh and/or eighth aspects.

In a ninth aspect, this specification describes, an apparatus comprising means for: transmitting, from a user equipment, a first activation signal to a passive radio apparatus; receiving, at the user equipment, an indication for transmitting a second activation signal; transmitting, from the user equipment, the second activation signal to the passive radio apparatus; and receiving, at the user equipment, location information related to at least one of a distance between the user equipment and the passive radio apparatus and a distance between a reader device and the passive radio apparatus based at least partially on the second activation signal.

The apparatus of the ninth aspect, further comprising means for performing operations according to any preceding apparatus definition of the first aspect.

In an tenth aspect, this specification describes, an apparatus comprising means for: receiving, from an activator device, a first activation signal directed towards a passive radio apparatus; receiving, from the passive radio apparatus, at least one first initial reply signal in relation to the first activation signal; transmitting, from a user equipment, an indication for transmitting a second activation signal; receiving, from said activator device, the second activation signal directed towards the passive radio apparatus; receiving, from the passive radio apparatus, at least one second initial reply signal in relation to the second activation signal; determining, based at least partially on at least one second initial reply signal received from the passive radio apparatus, location information related to at least one of a distance between the activator device and the passive radio apparatus, and a distance between the user equipment and the passive radio apparatus; and transmitting, from the user equipment, the location information related to at least one of the distance between the activator device and the passive radio apparatus, and the distance between the user equipment and the passive radio apparatus.

The apparatus of the tenth aspect, further comprising means for performing operations according to any preceding apparatus definition of the second aspect.

**Brief Description of the Drawings**

Example embodiments will now be described by way of non-limiting example, with reference to the accompanying drawings, in which:

FIG. 1a is a schematic view of an example wireless communication system for locating a passive radio apparatus for understanding example embodiments;
FIG. 1b is a schematic view of another example wireless communication system for locating a passive radio apparatus for understanding example embodiments;
FIG. 1c is a flow diagram illustrating an example A-IoT location method for understanding example embodiments;
FIG. 1d is a flow diagram illustrating an example reader A-IoT location method for understanding example embodiments;
FIG. 1e is a flow diagram illustrating an example activator A-IoT location method for understanding example embodiments;
FIG. 2a is a schematic view of an example wireless communication system with two UEs configured for locating an A-IoT device for understanding example embodiments;
FIG. 2b is a schematic view of another example wireless communication system with UE configured for locating an A-IoT device for understanding example embodiments;
FIG. 2c is a schematic view of a further example wireless communication system with a plurality of UEs configured for locating an A-IoT device for understanding example embodiments;

FIG. 3a is a signal flow diagram illustrating an example A-IoT location signal flow for locating A-IoT device 102 using two UEs as illustrated in FIG. 2a for understanding example embodiments;

FIG. 3b is a signal flow diagram illustrating another example A-IoT location signal flow for locating A-IoT device using a single UE as illustrated in FIG. 2b for understanding example embodiments;

FIG. 3c is a signal flow diagram illustrating a further example A-IoT location signal flow for locating of A-IoT device using a UE as activator device and a plurality of UEs as reader devices as illustrated in FIG. 2c for understanding example embodiments;

FIG. 4 is a signal flow diagram illustrating further example wireless communication system for an activator device and reader device of FIG. 1a in locating a multi-frequency A-IoT device for understanding example embodiments;

FIG. 5 is a schematic view of an example apparatus for understanding example embodiments; and

FIG. 6 is a schematic view of an example computer-readable medium for understanding example embodiments.

## Detailed Description

The scope of protection sought for various embodiments of the invention is set out by the claims. The embodiments and features, if any, described in the specification that do not fall under the scope of the independent claims are to be interpreted as examples useful for understanding various embodiments of the invention.

In the description and drawings, like reference numerals refer to like elements throughout.

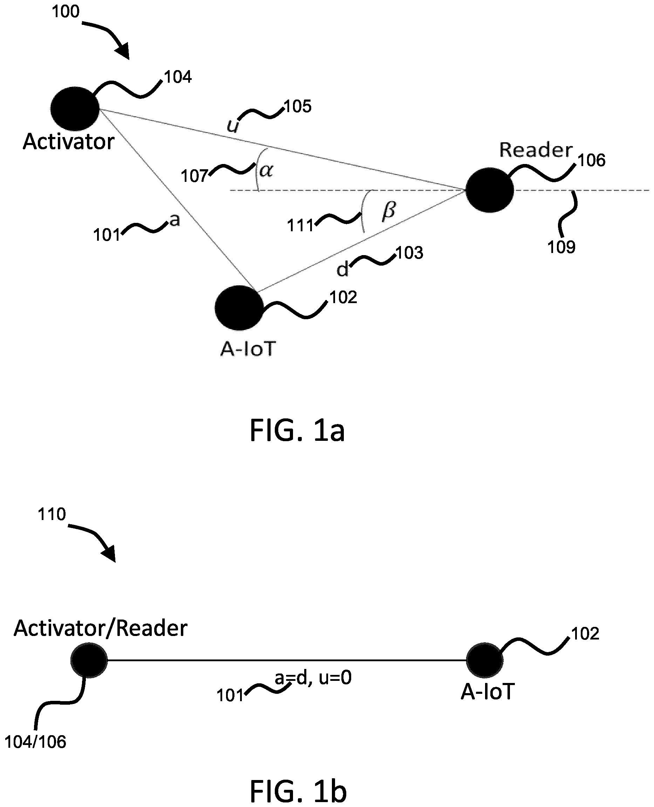

FIG. 1a shows an example wireless communication system 100 for using a passive radio apparatus 102. A passive radio apparatus 102 is an apparatus, componentry or a device that harnesses energy from wireless signals sent on specific carriers and/or bandwidths and charges a simple circuitry that, once activated, will emit/reflect a radio frequency (RF) signal which encodes at least the identity (e.g., ID) of the passive radio apparatus 102. Examples of the passive radio apparatus 102 include, without limitation, for example a passive radio device, a hybrid radio device such as semi-passive radio device including the passive radio apparatus or componentry and an active radio, an Ambient Internet of Things (A-IoT) device, a RF tag or tag, and/or any other communication device or network element, including the functionality of passive radio apparatus 102. In this example, the passive radio apparatus 102 is, without limitation, for example an A-IoT device 102 (also referred to as a tag). An activator device 104 is a device or apparatus that sends an activation signal targeted at waking up the passive radio apparatus 102. The passive radio apparatus 102 harnesses energy over a range of frequencies and listens for activation signals. Once such a signal is detected, the passive radio apparatus 102 emits/reflects an RF signal (also referred to herein as a reply signal) which is specific to that passive radio apparatus ID, and/or may include information. A reader device 106 is a device or apparatus that listens and detects the passive radio signals emitted from passive radio apparatus 102.

In FIG. 1a, the distance $a$ 101 is the distance or range from the activator device 104 to the A-IoT device 102, the distance d 103 is the distance or range from the A-IoT device 102 to the reader device 106, the distance $u$ 105 is the distance or range from the reader device 106 to the activator device 104, the angle $\alpha$ 107 is an angle of arrival (AoA) of a transmission from the activator device 104 at the reader device 106 with respect to reference line 109, or an angle of departure (AoD) of a transmission from the reader device 106 to the activator device 104 with respect to the reference line 109, and the angle $\beta$ 111 is an angle of arrival (AoA) of a transmission from A-IoT 102 at the reader device 106 with respect to reference line 109, or an angle of departure (AoD) of a transmission from the reader device 106 to A-IoT device 102 with respect to the reference line 109. The reader device 106 may or may not be collocated with the activator device 104. FIG. 1b shows another example system architecture 110 when the activator device 104 and reader device 106 are collocated. When the activator/reader devices 104/106 are collocated, then the distance $a$ 101 is equal to the distance d 103 and the distance u is zero.

Regarding IoT applications, 3rd Generation Partnership Project (3GPP) has specified narrowband Internet of Things (NB-IoT)/ enhanced machine-type communication (eMTC) and New Radio Reduced Capability (NR RedCap) before Release 18 to satisfy the requirements on low cost and low power devices for wide area IoT communication. These IoT devices usually consume tens or hundreds of milliwatts power while transmitting/receiving, and they only cost a few dollars. However, to achieve the internet of everything, IoT devices with ten or even a hundred times lower cost and power consumption are required, especially in many applications that require batteryless IoT devices such as A-IoT devices. Given the number of such batteryless A-IoT devices or hybrid A-IoT devices such as semi-passive devices with A-IoT or passive radio apparatus functionality, location and ranging of such A-IoT devices or hybrid A-IoT devices in NR networks can be an issue and impact many IoT applications where accurate location and/or ranging of A-IoT devices is desirable.

For simplicity, the following description refers to an A-IoT device 102, by way of example only and the following is not so limited, it is to be appreciated by the skilled person that the following methods, systems, apparatus signal flows, and/or processes are applicable to, without limitation, for example any type of passive radio apparatus 102 or A-IoT device 102, hybrid A-IoT device, hybrid radio devices such as semi-passive radio device including the passive radio apparatus or componentry and an active radio, a RF tag or tag, and/or any other communication device or network element including the functionality of a passive radio apparatus 102; combinations thereof, modifications thereto, as herein described and/or as the application demands.

For example, a ranging procedure using the activator device 104, reader device 106 and A-IoT device 102 for determining the distance or range *a* 101 between the activator device 104 and the A-IoT device 102, and the distance or range d 103 between the reader device 106 and the A-IoT device 102 requires the A-IoT device 102 to be charged before responding to an interrogation/activation signal. However, determining these distances/ranges to the A-IoT device 102 is a challenging task for both activator and reader devices 104 and 106. This is because the A-IoT device 102 is a batteryless device that needs to accumulate sufficient charge before responding to an interrogation/activation signal sent by an activator device 104. Since the activator device 104 does not know the current charge of an A-IoT device 102, it cannot effectively estimate how long a time the A-IoT device 102 takes to charge before responding to the interrogation/ activation signal, i.e., before it emits a reply signal (or a set of one or more reply signals) in response to the interrogation/activation signal. This means neither the activator device 104 nor the reader device 106 are able to determine, upon reception of the reply signal with a time delay *D,* how much the propagation delays (denoted as *dp*) versus the charge delay (denoted as *dc*) contributed to the total delay *D.* This leads to inaccuracies in determining the distance or range *a* 101 between the activator device 104 and the A-IoT device 102, and the distance or range *d* 103 between the reader device 106 and the A-IoT device 102, and hence the location of the A-IoT device 102.

In addition to the charge delay *dc*, additional delays at the A-IoT device 102 can also include, without limitation, for example the time to wake-up the A-IoT device 102 and/or time required to initialize the A-IoT device 102 prior to charging the A-IoT device 102. Although the charge delay *dc* for charging the A-IoT device 102 is considered in the following description, this is by way of example only and the following A-IoT location methods / measurements and the like are not so limited, it is to be appreciated by the skilled person that in addition to charge delay dc further additional delays may also be modelled and/or measured for use in determining the delays attributed to the A-IoT device 102 responding to the first and/or second activation signals. This may further increase the accuracy of the A-IoT location methods performed by the activator and/or reader devices 104 and 106.

The above mentioned inaccuracies can be overcome or addressed by the example A-IoT location techniques using a two-stage or double activation procedure described herein in which the activator device 104 operates with the reader device 106 for accurately estimating the required distances/ranges and/or charging delay and the like. The double activation procedure includes activator device 104 operating to transmit first and second sets of interrogation/activation signals to the A-IoT device. In a first activation period (or calibration of the A-IoT device 102), the activator device 104 transmits a first set of interrogation/activation signals for charging the A-IoT device 102 from a first state (e.g., an unknown charged state), and, after charging to a known power level *Pf,* causing the A-IoT device 102 to emit one or more reply signals until a second state (e.g., a fully discharged state or a known charged state). In a second activation period of the A-IoT device 102, the activator device 104 transmits a second set of activation signals for charging the A-IoT device 102 from the second state (e.g., known charged state, or known fully discharged state). The reader device 106 processes the activation signals of the first and second activation periods and the corresponding emitted reply signals from the A-IoT device 102 in response to the first and second sets of interrogation/activation signals to distinguish the different propagation delays and determine first and second bias ranges *r1* and *r2* associated with the A-IoT charge delays, and hence acquire the required information for estimating the distances *a* and d 101 and 103 and a first bias range offset *b1* resulting from the A-IoT device 102 being activated from the first state (e.g., an unknown charged state) in the first activation period and second bias range offset *b2* resulting from the A-IoT device 102 being activated from the second state (e.g., a known charged state) in the second activation period.

Specifically, the reader device 106 distinguishes among and computes: i) the propagation delays of the activation signal i.e., the time the activation signal takes to travel the distance u 105 (e.g., distance from the activator device 104 to the reader device 106) and the distance *a* 101 (e.g., distance from the activator device 104 to the A-IoT device 102); ii) the propagation delay of the A-IoT device's 102 reply signal (or A-IoT reply signal) sent in response to the second set of interrogation/activation signal from the activator device 104 (e.g., the time the A-IoT reply signal takes to travel the distance from the A-IoT device 102 to the reader device 106; and iii) the A-IoT variable first unknown bias range offset *b1* due to the variable charging delay from the first state (e.g. unknown charged state) i.e., the time the A-IoT device 102 takes to charge from an unknown charged state before transmitting it's A-IoT reply signal, which assumes that the A-IoT device 102 holds an unknown residual charge at the first activation attempt when the first set of interrogation/activation signals are transmitted from the activator device 104, and assuming the A-IoT device 102 is in a second state (e.g., a known charged state or fully discharged state) at the second activation attempt when the second set of interrogation/activation signals are transmitted from the activator device 104 to the A-IoT device 102.

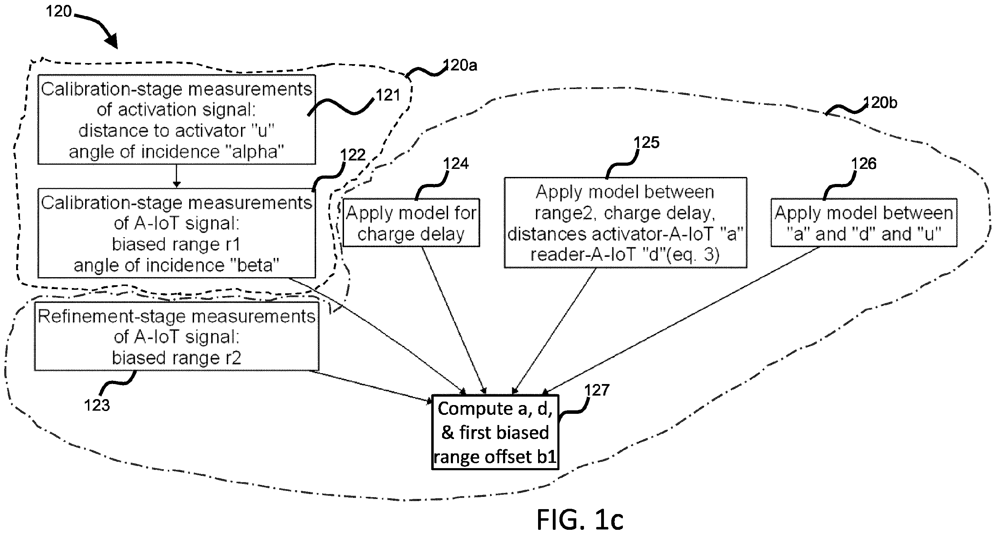

FIG. 1c is a flow diagram illustrating an example A-IoT location method 120 using a double activation procedure. In this example, the activator device 104 and reader device 106 operate cooperatively to perform the A-IoT location method 120 using the double activation procedure. This results in a joint detection of ranges/distances, propagation delays and charge times that are decoupled to calculate the distances *a* 101 and d 103 of FIG. 1a or 1b and a first bias range offset *b1*. Referring to FIG. 1a, the A-IoT location method 120 will be described, for simplicity and by way of example only but is not limited to, with reference to a single activator device 104 and single reader device 106 for detecting/calculating the distances or ranges *a* and *d* 101 and 103, and for estimating the first bias range offset *b1* and/or second bias range offset *b2*. The A-IoT ranging method 120 includes a first activation period 120a of the A-IoT device 102 and a second activation period 120b of the A-IoT device 102.

When activating the A-IoT device 102 (also referred to as a tag), the activator device 104 typically transmits an activation signal with a transmit power, denoted *Pt.* The received power at the A-IoT device 102, denoted *Pr,* is represented as *Pr f(Pt, a),* where *f()* is a known function or radio frequency (RF) signal propagation model that characterizes the attenuation of power with distance "*a*" 101, which is the distance between the activator device 104 and the A-IoT device 102. The function *f()* may be selected by the activator device 104, reader device 106 and/or a network device (e.g., a base station or other network element in a core network). For example, when a user equipment (UE) of a NR communication network includes the functionality of the activator device 104, the UE may be select function *f()* from a look-up table of RF signal propagation functions/models associated with the A-IoT device 102, or it is predetermined or specified based on a standard, and/or the UE may be instructed by a base station (e.g., eNB, gNB, or location management function (LMF), or other network device/element) to use a specific function *f()* when performing A-IoT location method 120. The function *f()* may also be communicated to the reader device 106 for use in performing A-IoT location method 120.

The function *f()* is a known RF signal propagation function/model that characterizes or models the attenuation of power with distance *"a"* 101. The function *f()* can be based on various different models such as, without limitation, for example, a free-space propagation model that models propagation of RF signals based on the Friis Equation; a two-ray ground model that takes into account the presence of scattering and reflection of the antecedent RF signal; any other type of deterministic model; a probabilistic propagation model that deduces parameters based on distributions enabling realistic modelling such as a Rayleigh model; and/or any other type of propagation model; combinations thereof, modifications thereto, and/or as the application demands.

The activator device 104 transmits a set of one or more first activation signals to the A-IoT device 102 in a first activation period, the A-IoT device 102 harvests the received power and charges, and as soon as the A-IoT device 102 has collected at least a predetermined power level of *Pf* of charge (e.g., the minimum amount of charge enabling transmission of one or more reply signals, or a specified amount of charge enabling the A-IoT device 102 to perform a predefined set of transmissions of reply signals), where *Pf* is known by design of the A-IoT device 102. Once the A-IoT device 102 has a power level of *Pf* of charge, it starts transmitting reply signals accordingly. The power level of *Pf* of charge enables the A-IoT device 102 to transmit one or more reply signals, which may include the identity (ID) of the A-IoT device 102 and/or other information associated with the function of the A-IoT device 102 as the application demands. Assuming the A-IoT device 102 has previously collected an unknown residual power level, *Pres,* of charge, then the time to collect at least the power level *Pf* of charge or the charge delay time, denoted as *tb,* can be modelled using a charging model based on:

$$tb \approx t_u \frac{Pf - Pres}{Pr} = t_u \left( \frac{Pf}{f(Pt,a)} - \frac{Pres}{f(Pt,a)} \right) \quad (0)$$

where $t_u$ is the time resolution for power collection, *Pr* is the received power from harvesting the activation signal, *Pt* is the transmission power of the activation signal, the distance *a* 101 is the distance from the activator device 104 to the A-IoT device 102, *Pf* is a predetermined power level enabling transmission of one or more reply signals, *Pres* is the residual charge of the A-IoT device 102, the function *f()* is a specified RF propagation model that may be known by the activator device 104 and reader devices 106, or which the reader device 106 receives from the activator device 104 or other network device (e.g., base station, location management function (LMF), etc.) prior to the A-IoT location method/procedure 120.

Note that if the A-IoT device 102 is fully discharged, then *Pres = 0* and the total time reduces to the first term of

$$tb \approx t_u \frac{Pf}{Pr} = t_u \left( \frac{Pf}{f(Pt,a)} \right))$$

Equation (0) (e.g., . Note that an approximation of Equation (0) was used to ease the explanation of the following A-IoT location method 120 using the double activation procedure, for simplicity and by way of example only. It is to be appreciated by the skilled person that other *tb* calculations/approximations/ models can be used instead of Equation (0) with the A-IoT location methods as described herein. For example, if the reader device 106 lacks any information/assistance data from the activator device 104 and/or from other network devices (e.g., base station) in the wireless communication network in which it is operating, then the reader device 106 may use the *tb* charging model of Equation (0) as a default option for computing *tb,* i.e., the charging time of A-IoT device 102. Conversely, if assistance data is available for selecting another *tb* charging model, the reader device 106 may apply the corresponding *tb* charging time model: *tb* ≈ *g(Pf, Pres, f(Pt, a))*, where g is a known RF propagation function/model for defining the another *tb* charging time model.

The first activation period 120a includes a first calibration stage for determining a distance or range *u* 105 between the activator device and the reader device 106 and a second calibration stage for determining a first bias range (*r1*) and a first unknown bias range offset *b1* (or first bias range offset) due to a first state of A-IoT device 102 having, for example, an unknown residual charge of the A-IoT device 102 and unknown charging time from first state of the A-IoT device 102 to power level *Pf*. The second activation period 120b includes a refinement stage, where A-IoT device 102 is in a second state in which it is known there is negligible residual charge on the A-IoT device 102 i.e., the A-IoT device 102 is likely to be in a fully discharged state, or A-IoT device 102 is in a known charged state. Subsequent calculation of the ranging parameters and/or location estimate is performed. The example A-IoT location method 120 includes the following operations of:

In operation 121 during or after the first activation period 120a, a first calibration or measurement stage is performed, where using the geometry of FIG. 1a, the activator device 104 transmits a set of one or more first activation signals to the A-IoT device 102. The set of one or more first activation signals are received by the A-IoT device 102 and harvested for charging the A-IoT device 102 from the first state. After charging to a known power level of *Pf,* the A-IoT device 102 transmits a first set of one or more reply signals until it is fully discharged. The reader device 106 receives both the first activation signal transmissions from the activator device 104 and also the corresponding A-IoT device's 102 first set of one or more reply signal(s). In the first calibration stage, the reader device 106 uses the received first activation signal transmitted from the activator device 104 to compute the distance or range u 105, and optionally, the angle of arrival of the first activation signal $\alpha$ 107 with respect to reference line 109.

In operation 122 during or after the first activation period 120a, using at least one of the received A-IoT device's 102 reply signals, the reader device 106 also computes the angle of arrival (AoA) $\beta$ 111 of the received A-IoT device's 102 reply signal $\beta$ 111. From this, the reader device 106 computes a first biased range (*r1*) using the propagation delays, which can be approximated as:

$$r1 \approx a + d + b1 \ (1),$$

where *b1=d1\*c* is the first unknown bias range offset (or first bias range offset or first bias offset) due to the unknown charging time the A-IoT device 102 takes to charge before emitting the first set of one or more reply signals, where *b1* is in metres (m), c is the speed of light, *d1* is the charging time to collect at least the power level *Pf* of charge and may be calculated from *tb* in the charging model of Equation (0) prior to transmission of the first set of reply signals to the reader device 106. However, given that *Pres* is unknown, then *tb* and hence the charge time *d1* is unknown. Note that if the activator device 104 and reader device 106 are collocated as depicted in FIG. 1b, then *a = d* in Equation (1), and the range *d* can be straightforwardly obtained.

If the activator device 104 and reader device 106 are collocated, the reader device 106 can also determine the best angle of departure (AoD) for the second activation signal from the activator device 104 as being equal to the AoA $\beta$ 111.

In operation 123, in the second activation period 120b, a refinement stage is performed, where the activator device 104 transmits a set of one or more second activation signals to the A-IoT device 102, for charging the A-IoT device from the second state. After charging to a power level of *Pf,* the A-IoT device 102 transmits a second set of one or more second reply signals until it is fully discharged, the second set of one or more reply signals includes at least an initial reply signal. The reader device 106 receives from the A-IoT device's 102 the initial reply signal (i.e., the first reply signal of the second set of one or more reply signals) and the reader device 106 measures the second A-IoT device initial reply signal and using the propagation delays computes a second biased range (*r2*) approximated as:

$$r2 \approx a + d + b2 \ (2),$$

where *b2 = dc\*c,* is the second bias range offset (or second bias offset) due to the time or total charge delay *dc* the A-IoT device 102 takes to charge from the second state, e.g. in this case from a known discharged state or known charged state before the A-IoT device 102 emits the second set of one or more reply signals, where *dc* is the total charge time for charging A-IoT device 102 from the second state to power level *Pf* (e.g., the second state is a fully discharged state), where *b2* is in metres (m), and *c* is the speed of light.

In operation 124, a charging model for approximating the charge delay dc may be applied such as, without limitation, for example when *f()* is a free space model and the second state is known to be a fully discharged state (e.g., *Pres=o),* then *tb* in Equation (0) may be applied to calculate *dc*, where *dc* may be based on:

$dc = t_u \frac{Pf}{f(Pt,a)} \approx t_u \frac{P_f}{Pt \times const} 4\pi a^2$ , where *const.* is a known constant proportional to the antenna gains of the transmitter, receiver and path loss factor and wavelength. It is noted that the second state may be any known charged or discharged state of the A-IoT device 102 in which *Pres* is known, which means *tb* of Equation (0) may be applied to compute dc based on the known *Pres.*

In operation 125, given the A-IoT device 102 is known to be in a second state, which in this example is a fully discharged state, at the start of the second activation period, the charging model based on, without limitation, for example the free space model (other propagation models may be applied as the application demands) may be applied to the second range (*r2*) of Equation (2), which can be further approximated as:

$$r2 \approx a + d + t_u \frac{P_f \times c}{Pt \times const} \, 4\pi a^2 \quad (3)$$

If the activator device 104 and reader device 106 are collocated, then *a* = *d* in Equation (1), and the range d 103 can be straightforwardly obtained.

In operation 126, if the activator device 104 and reader device 106 are not collocated, then, using the distance u 105 and the AoAs $\alpha$ and $\beta$ 107 and 111 the reader device 106 derives a second relationship between distances *a, d* and *u* 101, 103 and 105, which is represented by model:

$$a^2 = 2ud\, cos(\alpha + \beta) + d^2 + u^2 \quad (4).$$

In operation 127, the distances *a* 101, d 105, and first unknown bias range offset *b1* (or first bias range offset) are computed by combining and solving Equations (1), (3) and (4), where, in this example, the reader device 106 solves this system of three equations with three unknowns, i.e., *a, d, b1* and obtains estimates for the first unknown bias range offset *b1* (or first bias range offset) the distance *a* 101 between the activator device 104 and the A-IoT device 102, and the distance *d* 103 between the reader device 106 and the A-IoT device 102.

Although the example A-IoT location method 120 using a double activation procedure is described with respect to a A-IoT device 102, a single activator device 104, and a single reader device 106 as shown in FIGs. 1a or 1b, it is also applicable to a scenario with multiple reader devices 106. In the case that multiple reader devices 106 are available, the A-IoT location method 120 may be further modified and simplified in which each of the multiple reader devices measure only range information (e.g., *r1, r2*) with respect to the A-IoT device 102 and activator device 104 and not angle of arrival, where each of the reader devices report their calculated ranging information (e.g., *r1, r2*) to a server or designated reader device (e.g., LMF or another UE) via a base station (e.g., gNB) of the wireless communication network (e.g., a NR network). For example, the server (LMF) or designated reader device computes differential ranges, removing thus the unknown distance *a* 101 between the activator device 104 and the A-IoT device 102. The server or designated reader device then uses these differential ranges and the locations of the multiple reader devices to multilaterate the location of the A-IoT device 102. Thus, a location estimate of the A-IoT device 102 is computed.

Further modifications may include, rather than using Equation (0), the reader device 106 (e.g., upon instruction) applying another (but known) model *tb z:: g(Pf, Pres),* then, the problem becomes that of, having measured *r1, r2,* the distance u 105, AoA $\alpha$ 107 and AoA $\beta$ 111, estimating distance *a* 101, distance d 103, and first unknown bias range offset *b1* (or first bias range offset) based on the time to charge using the set of equations:

$$\begin{cases} r1 \approx a + d + b1 \\ r1 - r2 \approx b1 - g\big(Pf, Pres, f(Pt, a)\big) \\ a^2 \approx 2ud\, cos(\alpha + \beta) + d^2 + u^2 \end{cases}$$

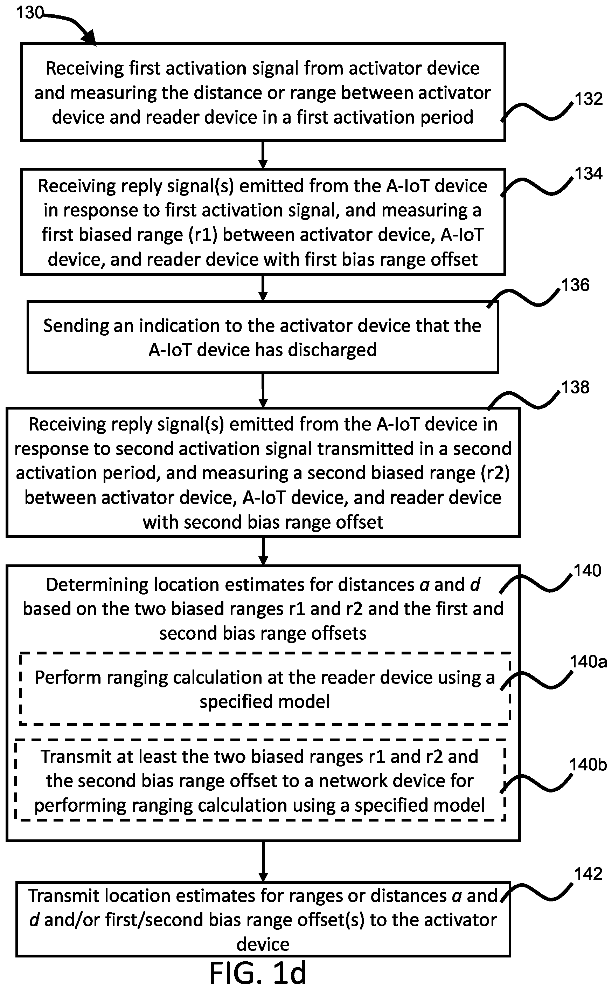

FIG. 1d shows an example reader A-IoT location method 130 performed by the reader device 106 of FIGs. 1a, 1b and/or 1c based on the double activation procedure. The reader A-IoT location method 130 includes the reader device 106 performing the following steps of:

In step 132, in response to the activator device 104 transmitting one or more first interrogation/activation signals to the A-IoT device 102 in a first activation period, receiving the one or more first activation signals and measuring the distance or range u 105 between activator device 104 and reader device 106, and optional incident angle or the angle of arrival *a* 107 of the first activation signal transmitted during the first activation period.

In step 134, receiving a first set of reply signal(s) transmitted by the A-IoT device 102 in response to the first interrogation/activation signal and measuring a first biased range (e.g., $r_1$) and, as an option an incident angle or AoA $\beta$ 111 of the A-IoT device 102 reply signal transmitted as a response to the first interrogation/activation signal in the first activation period. For example, measuring the first biased range *r1* includes using a predetermined or specified range model that models the first biased range *r1* as the sum between true range or distance d 103 between the reader device 106 and the A-IoT device 102, the true range or distance *a* 101 between activator device 104 and A-IoT device 102, and a first unknown bias range offset *b1* (also referred to as first bias range offset or first bias offset) caused by the unknown charging time of the A-IoT device 102, where the A-IoT device 102 in the first state is assumed to hold an unknown non-negligible residual charge. The reader device 106 may also estimate the first charge delay based on the number of reply signals transmitted by the A-IoT device 102 during the first activation period until the reply signals cease to be transmitted, which indicates the A-IoT device 102 entering the second state, e.g., full discharge of the A-IoT device 102.

As an option, reader device 106 determines from the first set of reply signals from the A-IoT device 102 the best resource configuration including at least one resource that the activator device 104 can use for transmitting the one or more activation signals to the A-IoT device 102. For example, the A-IoT device 102 may be a multi-frequency A-IoT device 102 and transmit each of the reply signals of the first set of reply signals on a different frequency resources (e.g., different carrier frequencies), where the reader device 106 receives the set of reply signals on the different frequency resources and selects a frequency resource in which the received reply signal has a maximum received signal power or signal to interference plus noise ratio (SINR). Although frequency resource is described, this is by way of example only and it is not sol limited, the skilled person would appreciate that the at least one resource of the resource configuration includes, without limitation, for example, at least one of: a time for transmission of the second activation signal, a frequency used for transmission of the second activation signal, or an angle of departure (AoD) $\alpha$ 107 or for transmission of second activation signal, and/or any other communication resource, combination thereof, modifications thereto, and/or as the application demands. The determined resource configuration includes at least one resource (e.g., frequency resource, time resource, angle of departure or AoD $\alpha$ 107 etc.) configured to be used by the activator device 104 for transmission of a second activation signal to the A-IoT device 102 based at least partially on the first activation signal. This provides the advantage of improved accuracy of the distance/range estimation performed by the reader device 106 due to improved reception of the reply signal from the A-IoT device 102. The reader device 106 sends the indication for the activator device 104 to transmit the set of one or more second activation signals along with a determined resource configuration for transmitting said set of one or more second activation signals.

In step 136, transmitting or sending to the activation device 104 an indication of the A-IoT device 102 being in the second state. For example, the second state includes the A-IoT device 102 being completely discharged. As an option, the indication may further include data representative of the first biased range $r1$. As an option, the indication may further include the determined resource configuration the activator device 104 can use for transmitting the one or more second activation signals to the A-IoT device 102.

In step 138, in response to the activator device 104 transmitting one or more second interrogation/activation signals to the A-IoT device 102 in a second activation period, receiving a second set of one or more reply signals emitted from the A-IoT device 102 and measuring the second biased range $r2$ of the A-IoT device 102 based on an initial reply signal transmitted in the second set of one or more reply signals. The initial reply signal is the first reply signal transmitted from the A-IoT device 102 and received by the reader device 106 in response to the second activation signal. The reader device 106 may also estimate the second charge delay based on the number of reply signals transmitted by the A-IoT device 102 during the second activation period until full discharge of the A-IoT device 102 occurs (e.g., until the emission/transmission of reply signals ceases from A-IoT device 102). The reader device 106 uses the predetermined or specified charging model to model the second biased range $r2$ as the sum between the true distance or range $a$ 101, the true distance or range d 103 and a second bias range offset $b2$. The second bias range offset b2 (also referred to as second bias offset) is caused by the charging time of the A-IoT device 102 from the second state, where the charging time is estimated and used in the charging model to estimate the second bias range offset $b2$. In this example, the second state of the A-IoT device 102 is assumed to be discharged or holds a known negligible residual charge at the time of the second activation period. The second bias range offset $b2$ is computed based on the estimated charging time and the charging time model of Equation (0) and/or variations thereof as described with reference to FIG. 1c.

In step 140, determining the ranges or distances $a$ and d 101 and 103 and/or the first bias range offset $b1$ based on the two biased ranges $r1$ and $r2$ and second bias range offset $b2$ and/or as described with reference to FIG. 1c.

As an option, in step 140a, the reader device 106 may apply a specified charging model for the A-IoT device 102 to compute the second bias range offset $b2$ and use the two biased ranges $r1$ and $r_2$ to compute location information of: a) the distance or range $a$ 101 between the activator device 104 and the A-IoT device 102; b) the distance or range d 103 between the reader device 106 and the A-IoT device 102; and c) the first bias range offset $b1$ (or first unknown bias range offset) as described with reference to FIG. 1c, where the second bias range offset $b2$ estimate is used to decouple a) from b).

As another option, in step 140b, the reader device 106 may transmit data representative of the two biased ranges $r1$ and $r2$, and the second charge delay estimate or even second bias range offset $b2$ to a base station or other network device for computing the ranges or distances $a$ and d 101 and 103 and/or first bias range offset $b1$ as described with reference to FIG. 1c. For example, the base station or network device may apply the specified charging model for the A-IoT device 102 with the second charge delay estimate to compute the second bias range offset $b2$ and use with the two biased ranges $r1$ and $r2$ to compute location information of: a) the distance or range $a$ 101 between the activator device 104 and the A-IoT device 102; b) the distance or range d 103 between the reader device 106 and the A-IoT device 102; and c) the first unknown bias range offset $b1$ (or first bias range offset) as described with reference to FIG. 1c. The location information may be transmitted to the reader device 106 and/or the activator device 104 as the application demands.

In step 142, the reader device 106 transmits location information including the distance or range $a$ 101 between the activator device 104 and the A-IoT device 102; b) the distance or range d 103 between the reader device 106 and the A-IoT device 102; and c) the first unknown bias range offset $b1$ or residual charge delay.

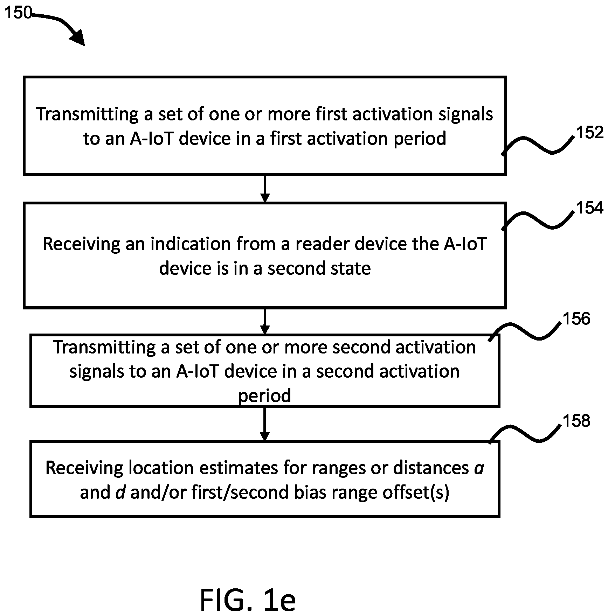

FIG. 1e shows an example activator A-IoT location method 150 of the activator device 104 of FIGs. 1a, 1b or 1c for use with reader A-IoT location method 130 of the reader device 106 based on the double activation procedure outlined in FIG. 1c. The activator A-IoT location method 150 includes the activator device 104 performing the following steps of:

In step 152, transmitting, by the activator device 104, a set of one or more first interrogation/activation signals to the A-IoT device 102 in a first activation period (also referred to as a calibration period). In response, the reader device 106 in step 121 of FIG. 1c (or step 132 of FIG. 1d) measures the distance or range $u$ 105 between activator device 104 and reader device 106, and optional incident angle (or AoA) $\alpha$ 107 of the first activation signal transmitted during the first activation period, and/or optional incident angle (or AoA) $\beta$ 111 of the A-IoT device 102 reply signal. Once the A-IoT device 102 has been charged from a first state (e.g., an unknown charged state) sufficiently (e.g., charged from first state to a predetermined power level or threshold (e.g., Pf) for transmitting one or more reply signals) by the interrogation/activation signal, it responds by emitting a first set of one or more reply signals (e.g., a plurality of reply signals each on a different frequency) until it is discharged. This enables the reader device 106 in operation 122 of FIG. 1c (or step 132 of FIG. 1d) to measure a first biased range $r1$ for use in computing the first bias range offset in a second activation period.

In step 154, receiving, by the activator device 104, an indication from the reader device 106 to start the second activation period. This is due to the A-IoT device 102 being in a known second state such as, for example, a fully discharged state. The indication may further include data representative of the first biased range $r1$, optional incident angles (or AoA) $\alpha$ 107 of the first activation signal at reader device 106 and/or (or AoA) $\beta$ 111 of the A-IoT device 102 reply signal at reader device 106 transmitted in response to the first interrogation/activation signal.

In step 156, transmitting, by the activator device 104, a set of second interrogation/activation signals to the A-IoT device 102 in the second activation period. Once the A-IoT device 102 has been charged sufficiently from the second state (e.g., charged from second state to a predetermined power level or threshold (e.g., $Pj$) for transmitting one or more reply signals) by the interrogation/activation signal, it responds by emitting one or more reply signals (e.g., a plurality of reply signals each on a different frequency) until it is discharged. This enables the reader device 106 in step 128 of FIG. 1c to measure a second biased range $r2$ and compute second bias range offset $b2$, and from this determine ranges or distances $a$ and d 101 and 103 and/or first unknown bias offset $b1$ (or first bias range offset) in step 140 of FIG. 1d and/or as describe with reference to FIG. 1c.

In step 158, receiving estimates for ranges or distances $a$ and d 101 and 103 and/or first bias range offset $b1$.

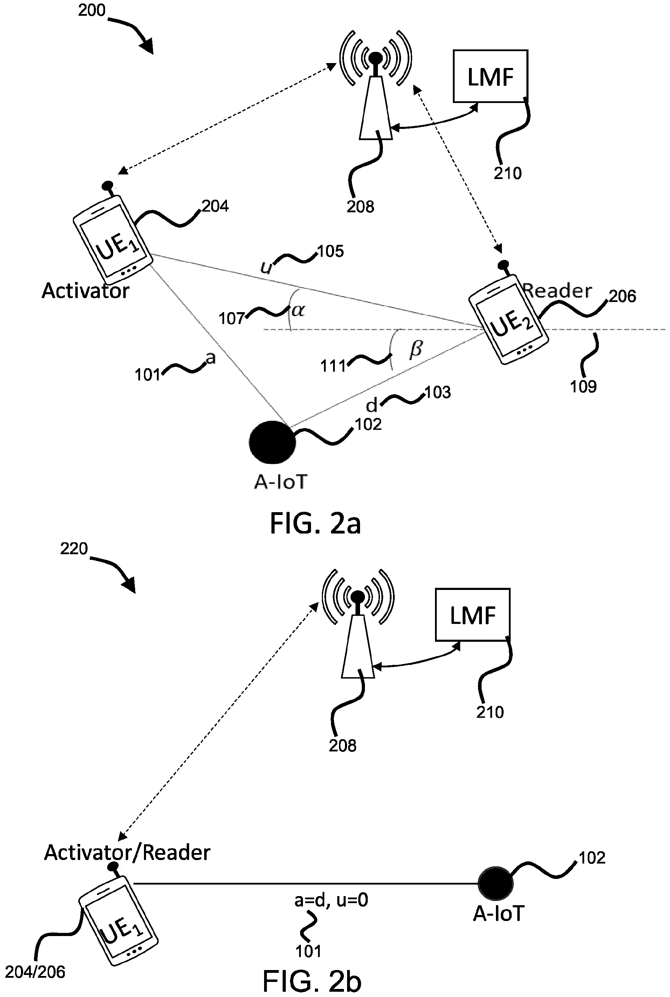

The activator and reader devices 104 and 106 can be any type of communication device for use in a wireless communication system such as, but not limited to, for example any combination of radio access network (RAN) elements including terrestrial network (TN) base stations (BSs), user equipment (UE), or other RAN elements within the wireless communication system 100. For example, the activator device 104 and reader device 106 may be two UEs, or a BS and a UE, or a UE and a BS, or the same UE or any other combination of communication devices as the application demands. FIGs. 2a to 2c illustrates wireless communication systems 200, 220 and 230 in which the activator device 104 is a UE 204 and the reader device 106 is a UE 206.

Although a wireless communication system 100 is described with reference FIGs. 1a to 1e and/or as herein described, this is by way of example only and it is not so limited, it is to be appreciated by the skilled person that any type of communication system or network is applicable such as, for example, any telecommunication system or network; any wireless communication network; a peer-2-peer communication network; a communication system or network using third generation (3G), fourth generation (4G), fifth generation (5G), and/or sixth generation (6G) and beyond standards technologies; a Wi-Fi communication network; and/or any other network for wireless communications between the activator and/or reader devices 104 and/or 106; combinations thereof, modifications thereto, and/or as the application demands. Although the activator device 104 is described as a UE and/or as herein described, this is by way of example only and it is not so limited, it is to be appreciated by the skilled person that the activator device 104 may be any type of communication device that is capable of communicating with the reader device 106 and/or A-IoT device 102 such as, without limitation, for example a UE, a BS, a mobile phone or smart phone, a laptop, a computing device, a device using 3G, 4G, 5G, and/or 6G and beyond standards technologies, and/or any other device used for wireless communications with the reader device 106 and/or A-IoT device 102; combinations thereof, modifications thereto, and/or as the application demands. Although the reader device 106 is described as a UE and/or as herein described, this is by way of example only and it is not so limited, it is to be appreciated by the skilled person that the reader device 106 may be any type of communication device that is capable of communicating with the activator device 104 and/or A-IoT 102 such as, without limitation, for example a UE, a BS, a mobile phone or smart phone, a laptop, a computing device, a device using 3G, 4G, 5G, and/or 6G and beyond standards technologies, and/or any other device used for communications with the activator device 104; combinations thereof, modifications thereto, and/or as the application demands.

FIG. 2a is a schematic view of an example wireless communication system 200 with two UEs 204 and 206 configured for locating an A-IoT device 102. In this example, the wireless communication system 200 includes a base station 208 (e.g., gNodeB (gNB)) connected to a server such as, for example, a location management function 210 (LMF), where the base station 208 is in communication with a first UE 204 and a second UE 206. The first UE 204 includes the functionality of an activator device 104 as described with reference to FIGs. 1a to 1e, and the second UE 206 includes the functionality of a reader device 106 as described with reference to FIGs 1a to 1e. In this example, the first UE 204 is locating an A-IoT device 102 and may communicate with the second UE 206 for assistance, which may include sending data representative of an indication of one or more charging models for use in determining the charging delay offset of the A-IoT device 102 during first and second activation time periods, which may be used for measuring and computing the ranges $r1$, $r2$ and hence computing distances $a$ 101 and $d$ 103 and/or first bias range offset $b1$ of A-IoT device 102 as shown in FIG 2a by using the A-IoT ranging methods 120, 130 and 150 as described with reference to FIGs. 1c to 1e. Alternatively, as an option, the base station 208 and/or LMF 210 may communicate with UEs 204 and 206 for determining location of A-IoT device 102, where the UE 204 is configured to act as an activator device and the UE 206 is configured to act as a reader device as described with reference to FIGs. 1a to 1e.

The UE 204 performs activation A-IoT location method 150 as described with reference to FIG. 1e and the UE 206 performs reader A-IoT location method 130 as described with reference to FIG 1d for computing ranges $r1$, $r2$ and distances $a$ 101 and $d$ 103 and/or the first bias range offset $b1$ of A-IoT device 102. The UE 204 transmits a set of one or more first activation signals associated with communicating and/or charging A-IoT device 102 in a first activation period, where the A-IoT device 102 harvests the one or more first activation signals and charges from a first state, which in this example is an unknown charged state, (e.g., either a discharged state or a partially charged or residual charged state) to a power level of $Pf$ that is known by the UE 204 and/or 206. After charging to a power level of $Pf$, the A-IoT device 102 emits or transmits a set of one or more first reply signals (e.g., including the identity (ID) of the A-IoT device 102, and/or any other information associated the A-IoT device and/or as the application demands). The A-IoT device 102 transmits the reply signals until it enters a second state, e.g., a fully discharged state or a known charged state. The UE 206 receives the one or more first activation signal transmissions and also the set of one or more first reply signals. The UE 206, configured as a reader device, computes the distance u 105 between the UE 204 and UE 206, AoAs $\alpha$ and $\beta$ 107 and 111, and also the range estimate $r1$ using propagation delays associated with the first activation signal transmissions and first reply signals.

After the reply signals cease, the UE 206 detects the A-IoT device 102 is in the second state (e.g., it has fully discharged or reached a known power level) and indicates to the UE 204 that the A-IoT device 102 is in the second state (e.g., a discharged state or known state). In response, the UE 204 transmits a set of one or more second activation signals associated with communicating and/or charging A-IoT device 102 in a second activation period, where the A-IoT device 102 harvests the one or more second activation signals and charges from the second state (e.g., the known discharged state or known power level) to the power level of $Pf$ that is known by the UE 204 and/or UE 206. After charging to a power level of $Pf$, the A-IoT device 102 emits or transmits a set of one or more second reply signals (e.g., including the identity (ID) of the A-IoT device 102, and/or any other information associated the A-IoT device 102 and/or as the application demands). The first second reply signal, referred to as an initial reply signal, is used by UE 206 to determine the range $r2$ and the second bias range offset $b2$ (or second bias range offset) associated with charging time required for charging the A-IoT device 102 from the second state (e.g., known discharged state). In this example, the UE 206 receives the set of one or more second reply signals. The UE 206, configured as a reader device, uses the propagation delays of the second reply signals (e.g., the initial reply signal of the set of second reply signals) to compute the range estimate $r2$ and uses the charging time model and a measured charging time (or charging delay) to compute the second bias range offset $b2$ as described with reference to FIGs. 1c to 1e. The UE 206 estimates the second bias range offset $b2$ (or second bias offset) due to charging of the A-IoT device 102 from the second state (e.g., a known discharged state) in the second activation period using on the charging time model associated with A-IoT device 102 as described with reference to FIGs. 1a to 1e. The UE 206 computes the distances $a$ and $d$ 101 and 103 and first unknown bias range offset $b1$ (or first bias range offset) by solving the Equations (1), (2) or (3), and (4) based on the computed range estimates $r1$, $r2$, and computed second bias range offset b2 (or second bias range offset).

Alternatively, as an option, the UE 206, configured as a reader device, may transmit ranging/location information associated with the propagation delays of the first and/or second activation signals, and/or the first and second reply signals to the base station 208 and/or LMF 210 for computing the range estimates u, $r1$, $r2$, and second bias range offset $b2$ as described with reference to FIGs. 1c to 1e based on the initial reply signal of the set of second reply signals. The base station 208 and/or LMF 210 computes location information including the distances $a$ and $d$ 101 and 103 and first unknown bias range offset $b1$ (or first bias range offset) by solving the Equations (1), (2) or (3), and (4) based on the computed range estimates $r1$, $r2$, and computed second bias range offset $b2$. The base station 208 or LMF 210, via the base station 208, may transmit the location information including the computed distances $a$ and $d$ 101 and 103 and the computed first and/or second bias range offsets $b1$ and $b2$ to the UE 204 and/or UE 206 for use in various location applications requiring location of A-IoT device 102 and/or as the application demands.

FIG. 2b is a schematic view of another example wireless communication system 220 with a UE 204/206 configured for locating A-IoT device 102. In this example, wireless communication system 220 includes a single UE 204/206 configured for locating an A-IoT device 102. The wireless communication system 220 includes a base station (e.g., gNB) 208 connected to a LMF 210, where the base station 208 is in communication with a UE 204/206. The UE 204/206 includes the functionality of both an activator device 104 and a reader device 106 as described with reference to FIGs 1b to 1e. In this example, the UE 204/206 is locating A-IoT device 102 and is configured to compute ranges $r1$, $r2$, second bias range offset $b2$, and hence distances $a$ 101 and $d$ 103 and first bias range offset $b1$ (also referred to as first unknown bias range offset $b1$) of A-IoT device 102 as shown in FIG 2b by using the A-IoT location methods 120, 130 and 150 as described with reference to FIGs. 1c to 1e. Alternatively, as an option, the base station 208 and/or LMF 210 may communicate with UE 204/206 for determining location of A-IoT device 102, where the UE 204/206 is configured by the base station (or LMF) to act as both an activator and reader device described with reference to FIGs. 1a to 1e.

The UE 204/206 performs both the activation A-IoT location method 150 as described with reference to FIG. 1e and reader A-IoT location method 130 as described with reference to FIG 1d for computing ranges $r1$, $r2$ and distances $a$ 101 and $d$ 103 and/or first and second bias range offsets $b1$ and $b2$ of A-IoT device 102. For example, the UE 204 transmits a set of one or more first activation signals associated with communicating and/or charging A-IoT device 102 in the first activation period, where the A-IoT device 102 harvests the one or more first activation signals and charges from a first state (e.g., an unknown charged state, which may be either a discharged state, a partially charged or residual charged state) to power level of $Pf$ that is known by the UE 204/206. After charging to the power level of $Pf$, the A-IoT device 102 emits or transmits a set of one or more first reply signals (e.g., including the ID of the A-IoT device 102, and/or any other information associated the A-IoT device 102 and/or as the application demands). The UE 204/206 receives the set of one or more first reply signals. The UE 204/206, configured as a reader device, computes AoA $\beta$ 111 of the reply signals, and also the first biased range estimate $r_1$ using propagation delays associated with the first reply signal transmissions.

After the UE 204/206 detects that the reply signal transmissions cease from A-IoT device 102, this indicates A-IoT device 102 is in the second state (e.g., a fully discharged state or a known power level state) the UE 204/206 transmits a set of one or more second activation signals associated with communicating and/or charging A-IoT device 102 in the second activation period, where the A-IoT device 102 harvests the one or more second activation signals and charges from the second state (e.g. a known discharged state) to the power level of $Pf$ that is known by the UE 204/206. After charging to power level of $Pf$, the A-IoT device 102 emits or transmits a set of one or more second reply signals (e.g., including the ID of the A-IoT device 102, and/or any other information associated the A-IoT device 102 and/or as the application demands). The first second reply signal, referred to as an initial reply signal of the second set of one or more reply signals, is used by UE 204/206 to determine the range $r2$ and second bias range offset $b2$ associated with charging of the A-IoT device 102 from the second state (e.g., a known discharged state). The UE 204/206 estimates the second bias range offset $b2$ due to charging of the A-IoT device 102 from the second state (e.g., a known discharged/charged state) using the charging model associated with A-IoT device 102 as described with reference to FIGs. 1a to 1e.

For example, as the UE 204/206 receives the set of one or more second reply signals, the UE 204/206, configured as a reader device, uses the propagation delays of the second reply signals to compute the range estimate $r2$ and uses a charging delay estimate to compute the second bias range offset $b2$ using the charging model as described with reference to FIGs. 1c to 1e. The range estimate $r2$ and second bias range offset $b2$ can be determined based on the initial reply signal of the set of second reply signals. The UE 204/206 computes the distance $a$ 101 (e.g., $a=d$, and $u=0$) and first unknown bias range offset $b1$ (or first bias range offset) by solving the Equations (1) and (2) or (3) based on the computed range estimates $r1$, $r2$, and computed second bias range offset $b2$.

Alternatively, as an option, the UE 204/206, configured as activator and reader devices, may transmit location information associated with the propagation delays of the first and second reply signals to the base station 208 and/or LMF 210 for computing the range estimates $r1$, $r2$, and first and second bias range offsets $b1$ an $b2$ as described with reference to FIGs. 1c to 1e. The base station 208 and/or LMF 210 computes the distances $a$ and $d$ 101 and 103 and first unknown bias range offset $b1$ (or first bias range offset) by solving the Equations (1) and (2) or (3) based on the computed range estimates $r1$, $r2$, and computed second bias range offset $b2$. The base station 208 or LMF 210, via the base station 208, may transmit the computed distances $a$ and $d$ 101 and 103 and the computed first and/or second bias range offsets $b1$ and $b2$ to the UE 204/206 for use in various location applications requiring location of A-IoT device 102 and/or as the application demands.

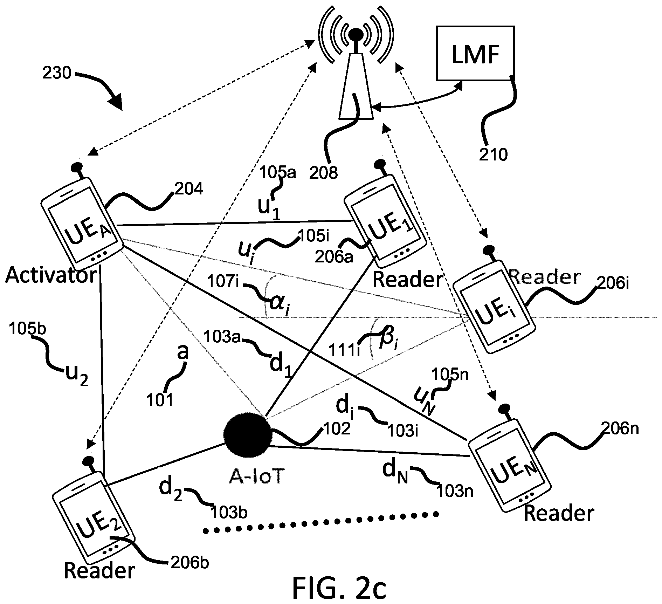

FIG. 2c is a schematic view of a further example wireless communication system 230 with a plurality of UEs 204 and 206a to 206n for locating an A-IoT device 102. Ambient IoT in 3GPP should enable ultra-low cost and ultra-low power A-IoT devices. The density of such A-IoT device deployment can be expected to be many orders of magnitudes higher compared to any known 3GPP deployment. Thus, a key element for such deployment is the localization of A-IoT devices. It is not only required to know the identity of an A-IoT device 102 and to communicate with the A-IoT device 102, but equally important is knowledge of the position of the A-IoT device 102.

In this example, the wireless communication system 230 includes a base station (e.g., gNB) 208 connected to LMF 210, where the base station 208 is in communication with a first UE 204, and a number N of UEs 206a to 206n, for $N>1$. The first UE 204 includes the functionality of an activator device 104 as described with reference to FIGs. 1a to 1e, and each of the plurality of UEs 206a to 206n includes the functionality of a reader device 106 as described with reference to FIGs 1a to 1e. In this example, the first UE 204 and the plurality of UEs 206a-206n are configured to assist in locating A-IoT device 102. The first UE 204 may communicate with each of the plurality of UEs 206a-206n for assistance, which may include sending data representative of an indication of a charging model for use by each of the plurality of UEs 206a-206n in determining the charging delays or first and/or second bias range offsets $b1$ and/or $b2$ resulting from charging of the A-IoT device 102 from first state and/or from second state during first and/or second activation time periods. Alternatively, as an option, the base station 208 and/or LMF 210 may communicate with and configure the UE 204 and/or the plurality of UEs 206a-206n for determining location of A-IoT device 102, where the plurality of UEs 206a-206n provide location information based on the propagation measurements performed during the first and second activation periods to the base station 208/LMF 210 for performing a multilateration computation using various biased ranges $r1_1$ to $r1_N$ and r2, to $r2_N$, where $r1_i \approx a + d_i + b1$ and $r2_i \approx a + d_i + b2$, for $1 \leq i \leq N$, and/or second bias range offset $b2$ determined by each of the plurality of UEs 206a to 206n. These ranges $r1_1$ to $r1_N$ and $r2_1$ to $r2_N$ and/or the second bias range offsets may be computed by UEs 206a-206n as described with reference to FIGs. 1a to 1e and sent from the UEs 206a-206n to base station 208, where the LMF 210 computes the location of A-IoT device 102 using multilateration.

In an example, the UE 204 performs activation A-IoT ranging method 150 as described with reference to FIG. 1e and the UEs 206a to 206n each perform reader A-IoT ranging method 130 as described with reference to FIG 1d for each computing ranges $r1, r2$ and/or second bias range offset of A-IoT device 102. The UE 204 transmits a set of one or more first activation signals associated with communicating and/or charging A-IoT device 102 in a first activation period, where the A-IoT device 102 harvests the one or more first activation signals and charges from an first state (e.g., an unknown charged state, which may either be a discharged state, a partially charged or residual charged state) to power level of $Pf$ that is known by the UE 204 and/or UEs 206a-206n. After charging to a power level of $Pf$, the A-IoT device 102 emits or transmits a set of one or more first reply signals (e.g., including the ID of the A-IoT device 102, and/or any other information associated the A-IoT device and/or as the application demands). Each of the UEs 206a-206n receive the one or more first activation signal transmissions and also the set of one or more first reply signals in the first activation period. The UEs 206a-206n, which are configured as a reader device, compute the distance $u_1$ to $u_n$ 1053-1050 between the UE 204 and each of UEs 206a-206n. As an option, for each $i$-th UE 206i of the UEs 206a-206n corresponding AoAs $\alpha i$ and $\beta i$ 107i and 111i for $1 \leq i \leq N$, where the $i$-th UE 206i of the plurality of UEs 206a-206n also computes the $i$-th range estimate $r1_i$ using propagation delays associated with the first activation signal transmissions and first reply signals. This data may be sent to base station 208 and/or LMF 210.

After the reply signals ceases, one or more of the UEs 206a-206n detects the A-IoT device 102 has discharged and indicates to the UE 204 (or to base station 208) that the A-IoT device 102 is in the second state (e.g., a known discharged state or a known charged state). In response, after UE 204 is notified the A-IoT device 102 is in the second state, the UE 204 transmits a set of one or more second activation signals associated with communicating and/or charging A-IoT device 102 in a second activation period, where the A-IoT device 102 harvests the one or more second activation signals and charges from the second state (e.g., the known discharged state or known charged state) to the power level of $Pf$ that is known by the UE 204 and/or 206a-206n. After charging to a power level of $Pf$, the A-IoT device 102 emits or transmits a set of one or more second reply signals (e.g., including the identify (ID) of the A-IoT device 102, and/or any other information associated the A-IoT device and/or as the application demands). The first second reply signal, referred to as an initial reply signal, is used by each $i$-th UE 206i of the plurality of UEs 206a-206n to determine the $i$-th range estimate $r2_i$ and second bias range offset $b2$ associated with charging of the A-IoT device 102 from the second state (e.g., a known discharged state or known charged state).

For example, the $i$-th UE 206i receives the set of one or more second reply signals. The $i$-th UE 206i, configured as a reader device, uses the propagation delays of the second reply signals to compute the $i$-th range estimate $r2_i$ and second bias range offset in a similar manner as described with reference to FIGs. 1c to 1e based on the initial reply signal of the set of second reply signals. The $i$-th UE 206i may also estimate the second bias range offset $b2$ due to charging of the A-IoT device 102 from the second state (e.g., known discharged state) in the second activation period using the charging model associated with A-IoT device 102 as described with reference to FIGs. 1a to 1e. The $i$-th UE 206i sends the computed $i$-th range estimate $r2_i$ and second bias range offset $b2$ to base station 208 or LMF 210. Each of the plurality of UEs 206a-206n performs these computations, where the base station 208 or LMF 210 receives location information including data representative of $r1_1$ to $r1_N$ and $r2_1$ to $r2_N$ and/or the second bias range offset, where the LMF 210 uses a multilateration computation to compute the location of A-IoT device 102 and/or computes the distances $a$ 101 and distances $d_1$ to $d_N$ 103a to 103n and first unknown bias range offset $b1$ (or first bias range offset). For example, the LMF 210 computes differential ranges based on $r1_1$ to $r1_N$ and $r2_1$ to $r2_N$, removing thus the unknown distance $a$ 101 between the activator device and the A-IoT device 102. The server then uses these differential ranges and the UE 204 and USs 206a-206n locations to multilaterate a location estimate of the A-IoT device 102. From this the first bias range offset $b1$ and/or distances $a$ 101 and $d_1$ to $d_N$ 103a to 103n may be computed if necessary. The base station 208 or LMF 210 (via base station 208) sends location information of the A-IoT device 102 including the location estimate of the A-IoT device 102, and/or, if computed, first bias range offset $b1$ and/or distances $a$ 101 and $d_1$ to $d_N$ 103a to 103n to the UE 204 for use in a location application and/or as the application demands.

Although wireless communication systems 200, 220 and 230 are described with reference FIGs. 2a to 2c and/or as herein described, this is by way of example only and it is not so limited, it is to be appreciated by the skilled person that any type of communication system or network is applicable such as, for example, any telecommunication system or network; any wireless communication network; a peer-2-peer communication network; a communication system or network using 3G, 4G, 5G, and/or 6G and beyond standards technologies; a Wi-Fi communication network; and/or any other wireless network for communications between the UE 204 as activator device 104, A-IoT device 102 and UE 206 or 206a-206n as reader device(s) 106; combinations thereof, modifications thereto, and/or as the application demands. Although the activator device 104 is described as a UE 204 with reference to FIGs. 2a to 2c and/or as herein described, this is by way of example only and it is not so limited, it is to be appreciated by the skilled person that the activator device 104 may be any type of communication device that is capable of communicating with the reader device 106 such as, without limitation, for example a UE 204, a BS, a gNB, a mobile phone or smart phone, a laptop, a computing device, a device using 3G, 4G, 5G, and/or 6G and beyond standards technologies, and/or any other device used for wireless communications with the A-IoT device 102 and/or reader device 106; combinations thereof, modifications thereto, and/or as the application demands. Although the reader device 106 is described as a UE 206 or 206a-206n with reference to FIGs. 2a to 2c and/or as herein described, this is by way of example only and it is not so limited, it is to be appreciated by the skilled person that the reader device 106 may be any type of wireless communication device that is capable of communicating with the activator device 104 and/or receiving reply signals from A-IoT device such as, without limitation, for example a UE 204 or 206, a BS or gNB 208, a mobile phone or smart phone, a laptop, a computing device, a device using 3G, 4G, 5G, and/or 6G and beyond standards technologies, and/or any other device used for communications with the activator device 104 and/or A-IoT device 102; combinations thereof, modifications thereto, and/or as the application demands.

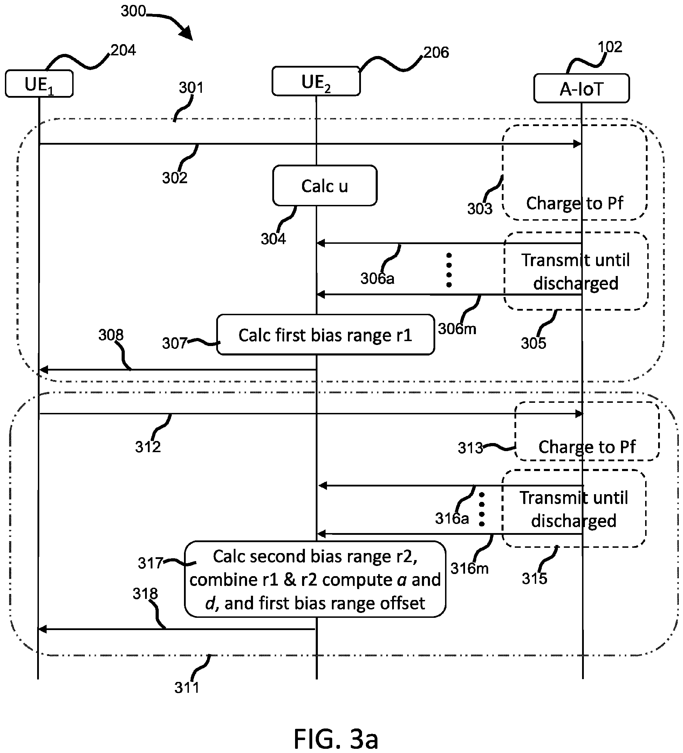

FIG. 3a is a signal flow diagram illustrating an example A-IoT location signal flow 300 for locating A-IoT device 102 using two UEs 204 and 206 of FIG. 2a. The A-IoT ranging signal flow 300 includes a first activation period 301 for determining a range u 105 between the UE 204 and UE 206 of FIG. 2a and determining the first biased range estimate $r1$ due to the first bias range offset $b1$ due to a residual charge of the A-IoT device 102 in a first state prior to charging. The A-IoT ranging signal flow 300 includes a second activation period 311 in which A-IoT device 102 is in a second state in which there is, for example, a negligible residual charge or known charge on A-IoT device 102 or the A-IoT device is fully discharged, and subsequent calculation of the second biased range estimate $r2$ and a second bias range offset $b2$. The A-IoT location signal flow 300 includes the following operations of:

The first activation period 301 is initiated by operation 302, in which the UE 204 (e.g., $UE_1$) transmits a set of one or more first activation signals to A-IoT device 102.

In operation 303, on receiving the first activation signal(s) the A-IoT device 102 harvests the first activation signal(s) to charge itself from a first state, which may be a residual charged state with power level Pres or a fully discharged state, to a charged state having a power level $Pf$.

In operation 304, the UE 206 (e.g., $UE_2$) also receives the first activation signal and uses the propagation delay to calculate the distance u 105 between the UE 204 and UE 206.

In operation 305, after being charged to a power level $Pf$, the A-IoT device 102 emits or transmits a set of one or more first reply signals 306a-306m, which are received by UE 206. The A-IoT device 102 emits the first reply signals 306a-306m until it reaches a second state (e.g., a fully discharged state, or a known charged state).

In operation 307, the UE 206 uses the propagation delays of the reply signals 306a-306m and/or activation signal to compute a first biased range estimate $r1$.

In operation 308, on detecting that no further transmissions of reply signals from A-IoT device 102 are being emitted, i.e., the A-IoT device 102 has reached the second state, the UE 206 transmits an indication to the UE 204 for proceeding to initiate the second activation period 311. The indication may also include a resource configuration for UE 204 to use when transmitting the second activation signals.

The second activation period 311 is initiated by operation 312, in which the UE 204 transmits a set of one or more second activation signals to A-IoT device 102.

In operation 313, on receiving the second activation signal(s) the A-IoT device 102 harvests the second activation signal(s) to charge itself from the second state (e.g., a known fully discharged state or a known charged state) to a charged state having a power level $Pf$.

In operation 315, after being charged to a power level $Pf$, the A-IoT device 102 emits or transmits a set of one or more second reply signals 316a-316m, which are received by UE 206.

In operation 317, the UE 206 uses the propagation delays of the second reply signals 316a-316m, preferably the initial second reply signal 316a, to compute a second biased range estimate $r2$ and/or a second bias range offset $b2$. The UE 206 also uses the Equations (1), (2) or (3), and (4) as described with reference to FIG. 1a to 1e to compute the distances $a$ and d 101 and 103 of FIG. 2a and/or the first bias range offset $b1$.

In operation 318, the UE 206 transmits the computed distances $a$ and d 101 and 103 of FIG. 2a and/or the first bias range offset $b1$ to the UE 204 for use in locating A-IoT device 102 and/or as the application demands.

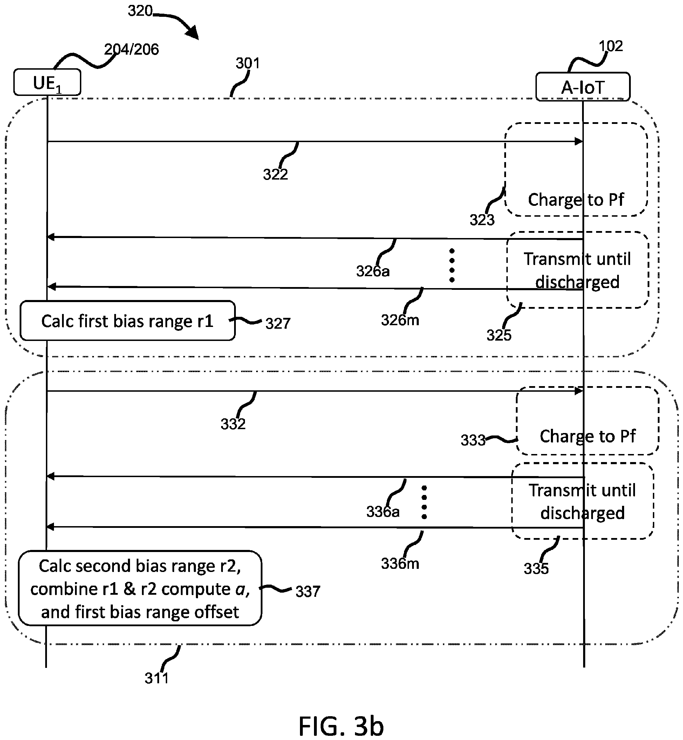

FIG. 3b is a signal flow diagram illustrating another example A-IoT location signal flow 320 for locating A-IoT device 102 using a single UE 204/206 of FIG. 2b. In this example, A-IoT ranging signal flow 320 further modifies the example A-IoT location signal flow 300 by having a single UE 204/206 include the functionality of both the activator device and reader device as described with reference to FIGs. 1a to 1e. The A-IoT location signal flow 320 includes the following operations of:

The first activation period 301 is initiated by operation 322, in which the UE 204/206 (e.g., $UE_1$) transmits a set of one or more first activation signals to A-IoT device 102.

In operation 323, on receiving the first activation signal(s) the A-IoT device 102 harvests the first activation signal(s) to charge itself from a first state (e.g., a residual charged state with power level Pres or a fully discharged state) to a charged state having a power level *Pf.*

In operation 325, after being charged to a power level *Pf,* the A-IoT device 102 emits or transmits a set of one or more first reply signals 326a-326m, which are received by UE 204/206. The A-IoT device 102 transmits the first reply signals 326a-326m until it enters a second state (e.g., a known discharged state, fully discharged state or a known charged state).

In operation 327, the UE 204/206 uses the propagation delays of the reply signals 326a-326m and/or activation signals to compute a first biased range estimate *r1.*

The second activation period 311 is initiated by operation 332, in which the UE 204/206 transmits a set of one or more second activation signals to A-IoT device 102.

In operation 333, on receiving the second activation signal(s) the A-IoT device 102 harvests the second activation signal(s) to charge itself from the second state (e.g., a known fully discharged state) to a charged state having a power level *Pf.*

In operation 335, after being charged to a power level *Pf,* the A-IoT device 102 emits or transmits a set of one or more second reply signals 336a-336m, which are received by UE 204/206.

In operation 337, the UE 204/206 uses the propagation delays of the second reply signals 336a-336m to compute a second biased range estimate *r2* and/or a second bias range offset *b2* as described with reference to FIG. 1c. For example, the UE 204/206 uses the Equations (1), (2) and/or (3) as described with reference to FIG. 1a to 1e to compute the distance *a* 101 of FIG. 2b and/or the first bias range offset *b1.*

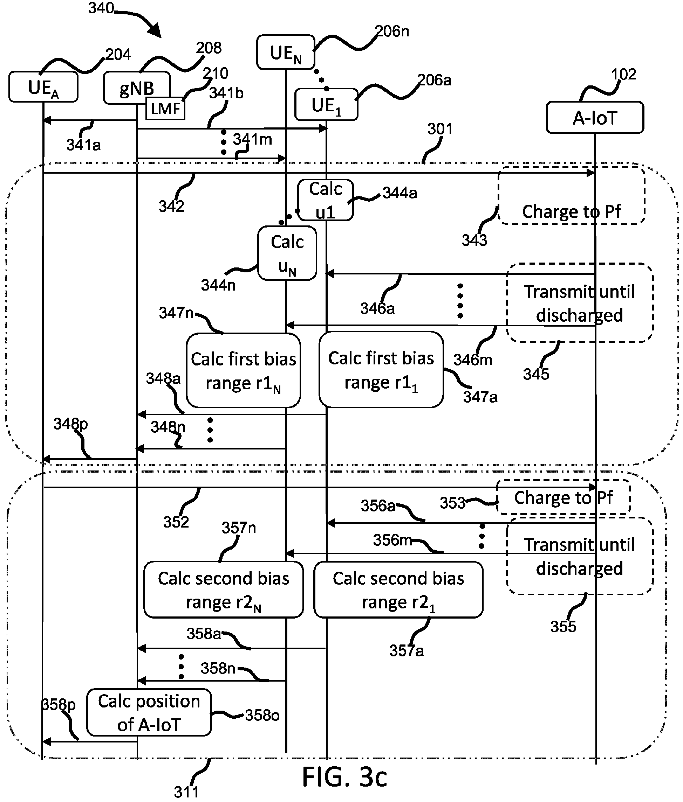

FIG. 3c is a signal flow diagram illustrating a further example A-IoT location signal flow 340 for locating of A-IoT device 102 using UE 204 as activator device and a plurality of UEs 206a-206n as reader devices of FIG. 2c. In this example, A-IoT location signal flow 340 further modifies the example A-IoT location signal flow 300 by including UE 204 with activator functionality and a plurality of UEs 206a-206n with reader device functionality as described with reference to FIGs. 1a to 1e and FIG. 2c. The A-IoT location signal flow 340 includes the following operations of:

Prior to the first activation period 301, a gNB 208 may communicate with UE 204 (e.g., $UE_A$) with a configuration message 341a to configure the UE 204 to act as an activator device, the gNB 208 may communicate with the plurality of UEs 206a-206n (e.g., $UE_1$ to $UE_N$) with a configuration messages 341b-341m to act as a plurality of reader devices for use in assisting the gNB 208 or LMF 210 (not shown) in locating the A-IoT device 102.

The first activation period 301 is initiated by operation 342, in which the UE 204 transmits a set of one or more first activation signals to A-IoT device 102.

In operation 343, on receiving the first activation signal(s) the A-IoT device 102 harvests the first activation signal(s) to charge itself from a first state (e.g., a residual charged state with power level Pres or a fully discharged state) to a charged state having a power level *Pf.*

In operations 344a to 344n, each of the UEs 206a-206n also receives the first activation signal and uses the corresponding propagation delay to calculate the distance $u_1$ to $u_N$ 105a to 105n between the UE 204 and each of UEs 206a-206n.

In operation 345, after being charged to a power level *Pf,* the A-IoT device 102 emits or transmits a set of one or more first reply signals 346a-346m, which are received by each of the UEs 206a to 206n. The A-IoT device 102 transmits the first reply signals 326a-326m until it enters a second state (e.g., a known discharged state, fully discharged state or a known charged state).

In operations 347a to 347n, each of the UEs 206a-206n uses the corresponding propagation delays of the reply signals 346a-346m and/or activation signals to compute corresponding first biased range estimates $r1_1$ to $r1_N$.

In operations 348a to 348n, each of the UEs 206a-206n sends the corresponding first biased range estimates $r1_1$ to $r1_N$ to the gNB 208 (and/or the LMF 210).

In operation 348p, on receiving the first biased range estimates $r1_1$ to $r1_N$ the gNB 208 determines that A-IoT device 102 has entered a second state (e.g., the A-IoT device 102 has fully discharged or is in a known charged state), the gNB 208 sends a message to the UE 204 indicating the second activation period 311 is to be performed. For example, the UEs 206a-206n may transmit the first biased range estimates $r1_1$ to $r1_N$ to the gNB 208 when the A-IoT device 102 ceases to transmit further reply signals, which indicates A-IoT device 102 is in the second state. On receiving the indication to perform the second activation period 311, the UE 204 proceeds to initiate the second activation period 311.

The second activation period 311 is initiated by operation 352, in which the UE 204 transmits a set of one or more second activation signals to A-IoT device 102.

In operation 353, on receiving the second activation signal(s) the A-IoT device 102 harvests the second activation signal(s) to charge itself from the second state (e.g., a known fully discharged state or a known charged state) to a charged state having a power level *Pf.*

In operation 355, after being charged to a power level *Pf,* the A-IoT device 102 emits or transmits a set of one or more second reply signals 356a-356m, which are received by UE 206.

In operations 357a to 357n, each of the UEs 206a to 206n uses the corresponding propagation delays of the second reply signals 356a-356m, preferably the initial second reply signal 346a received by each of the UEs 206a-206n, to compute corresponding second biased range estimates $r2_1$ to $r2_N$ and/or a second bias range offset $b2$ as described with reference to FIG. 1c

In operations 358a to 358n, each of the UEs 206a-206n sends the corresponding second biased range estimates $r2_1$ to $r2_N$ and/or a second bias range offset $b2$ to the gNB 208 (and/or the LMF 210).

In operation 3580, the gNB 208 and/or LMF 210 uses a multilateration computation to compute the location of A-IoT device 102 and/or compute the distances $a$ 101 and distances $d_1$ to $d_N$ 103a to 103n and first unknown bias range offset $b1$ (or first bias range offset) using second biased range estimates $r2_1$ to $r2_N$ and/or a second bias range offset $b2$. For example, the LMF 210 computes differential ranges based on $r1_1$ to $r1_N$ and $r2_1$ to $r2_N$, removing thus the unknown distance $a$ 101 between the activator device and the A-IoT device 102. The LMF 210 then uses these differential ranges and the UE 204 and UEs 206a-206n locations to multilaterate the location of the A-IoT device 102. Thus, the gNB 208 and/or LMF 210 computes a location estimate of the A-IoT device 102. As an option, from this the first bias range offset $b1$ and/or distances $a$ 101 and $d_1$ to $d_N$ 103a to 103n may be computed if necessary.

In operation 348, the gNB 208 and/or LMF 210 transmits location information including the computed location estimate of A-IoT device 102 and/or the first bias range offset $b1$ to the UE 204 for use in locating A-IoT device 102 and/or as the application demands. As an option, the gNB 208 or LMF 210 (via base station 208) may also send location information of the A-IoT device 102 including, if computed, first bias range offset $b1$ and/or distances $a$ 101 and $d_1$ to $d_N$ 103a to 103n to the UE 204 for use in a location application and/or as the application demands.

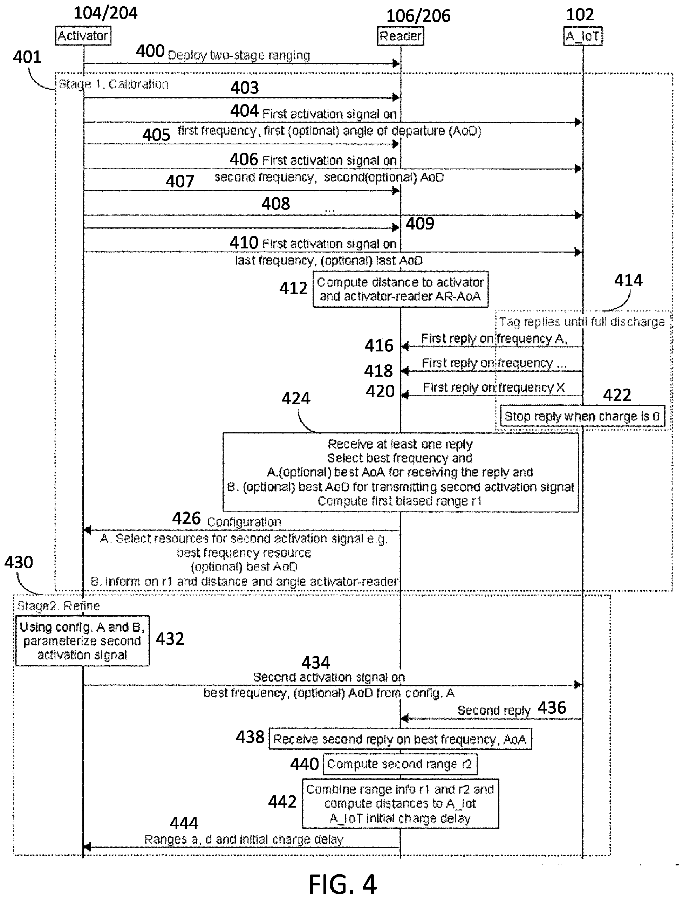

FIG. 4 is a signal flow diagram illustrating further example A-IoT location procedure in a wireless communication system 100 or 200-230 with an activator device 104/204 and reader device 106/206 (or 206a-206n) of FIGs. 1a to 1e or FIGs. 2a to 3c for locating the A-IoT device 102. In this example, the wireless communication system includes a NR NW in communication with an activator device 104 and a reader device 106, which may be part of one or more UEs as described with reference to FIGS. 1a to 3c. The A-IoT device 102 is a multi-frequency A-IoT device 102 in which the location may be determined using NR elements such as, for example, gNB 208 or UEs 204 and 206 (or 206a-206n) of FIGs. 2a to 2c and 3a to 3c, respectively.

There are several challenges when deploying and locating multi-frequency A-IoT devices. For example, the A-IoT device 102 needs to accumulate sufficient charge to respond to an interrogation/activation signal sent by an NR element such as activator device 104. Since the NR NW does not know the current charge of an A-IoT device 102, it cannot effectively estimate the charging time the A-IoT device 102 will take to charge before responding to an activation signal, therefore the NR NW nor the activator or reader devices 104 or 106 cannot tell, upon reception of the reply signal with a delay D from the A-IoT device 102, how much the propagation delays (denoted as $dp$) versus the charge delay (denoted as de) contributes to the total delay D of the received reply signals from A-IoT device 102. In another example, the A-IoT device 102 can be stimulated to respond on different carrier frequencies as it is a multi-frequency A-IoT device 102. However, some carriers may be busier than others (i.e., occupied by either several concomitant opportunistic A-IoT discoveries or other NR traffic), therefore the A-IoT device's 102 reply signal may be better received on some carriers than others. However, due to the opportunistic nature of the A-IoT device 102 discovery, the best carrier frequency for localizing a given A-IoT device 102 is not known in advance by either the gNB or LMF or activator/reader devices 104/106. In a further example, in higher frequency ranges, the interrogator/activator device 104 (or NR element) must additionally point the activation signal in the direction of the A-IoT device 102 to ensure the device charges sufficiently to a power level $Pf$ before responding with reply signals. However, the direction of the A-IoT device 102 relative to the activator device 104 is not known in advance, so the latter element/device must choose a best direction blindly.

As discussed with reference to FIGs 1a to 1e and using the reference numerals of FIGs 1a to 1e, the A-IoT location procedure of FIG. 4 includes the following key operations:

The first key operation occurs in a first activation period, where a calibration procedure 401 is used to obtain the first range information $r1$ including an unknown initial A-IoT charge delay of the A-IoT device 102. The calibration procedure 401 has the following steps a. to e., with reference to FIGs. 1a to 1e, of:

a. Activator device 104: the activator device 104 i) configures the reader device 106 for hierarchical ranging in operation 400 when deploying two-stage location/ranging: ii) the activator device 104 may additionally inform the reader device 106 (e.g. at operation 400 deploy two stage location procedure) about the charging profile or charging model (e.g. as described in FIG. 1c) used to determine the second bias range offset $b2$ of the A-IoT device 102 i.e. the charging model which the A-IoT 206 102 when collecting ambient energy (i.e., from the activation signal) as described with reference to FIGs. 1a to 1e; iii) sends a first activation signal on a first frequency 403 and 404 to reader device 106 and to A_IoT device 102, the first activation signal on a second frequency 405 and 406 to reader device 106 and to A_IoT device 102, the first activation signal on a third frequency 407 and 408 to reader 206 and to A_IoT device 102, and first activation signal on a last frequency 409 and 410 to reader device 106 and to A_IoT device 102. The activation signals are on all/some of the frequency and space (e.g., angle of departure AoD) resources associated with the A-IoT device 102. At operation 412, the reader device 106 computes the distance u 105 to the activator device 104 and activator-reader device AoA 107.

b. A-IoT device 102: after charging from a first state to at least a power level *Pf,* the A-IoT device 102 transmits until it enters a second state, which in this example is a fully discharged state, in operation 414, so that the inherent delay in the next stage/phase of the two-stage location procedure becomes known (i.e., dc). In this example, it is assumed that the A-IoT device's 102 default behavior is: upon activation with at least a power level of *Pf,* the A-IoT device 102 transmits until it discharges completely in operation 414, where the second state is a fully discharged state. Given that the NW does not possess any information about the location of the A-IoT device 102, the A-IoT device 102 should make itself heard by transmitting a set of reply signals on corresponding frequencies 416-420 to as many reader devices 106 as possible, to optimize the successful detection and/or localization probabilities. At 422, as part of 414, the A_IoT device 102 stops providing a reply when it enters the second state in which the charge is 0, i.e., it is fully discharged.

c. Reader device 106: the reader device 106 measures the first activation signal on first, second, third, up to the last frequencies 403, 405, 407, and 409 and also receives and measures the A-IoT device's 102 reply signals on the first, second, up to the last frequencies 416, 418, 420 as per configuration in part a. iii) of the calibration procedure 401.

d. Reader device 106: at operation 424, using the measurements in part c of the calibration procedure 401, the reader device 106: i) selects the best activation frequency for the second activation period; ii) selects the space resources AoD for activating the A-IoT device 102 in a second phase; iii) selects the space resources AoA for reading the A-IoT device 102 in a second phase; iv) computes, based on an implementation, initial biased ranging information $r1 \approx a + d + b1$ (see FIGs. 1a to 1e), where: *a* 101 is the distance from the activator device 102 to the A-IoT device 102, d 103 is the distance between the reader device 106 and the A-IoT device 102, $b1 = (d1*c)$ is the first unknown bias range offset (or calibration bias/first bias range offset) due to an unknown inherent A-IoT device charge delay time *d1* (cf. *tb* in Equation (0)), c is the speed of light (e.g., 3e8 m/s). The first bias range offset *b1* is due to the variable charging time of the A-IoT device 102, assuming that the A-IoT device 102 was in a first state with a partial unknown residual charge *Pres* when the procedure started as described with reference to FIG. 1c. In other words, *d1* is the time the A-IoT device 102 takes to charge before transmitting its reply signals 416-420, and *d1≤dc,* where *dc* is the total charging time to a power level *Pf* required by an A-IoT device 102 when in a second state (e.g., a fully discharged) to start responding. Note that at this point, the reader device 106 cannot distinguish between *a,* d and *b1*; nevertheless, the reader device 106 computes the range u 105 between the activator device 104 and the reader device 106.
Thus, as described, *d1* is the unknown charging time of the A-IoT device 102 (in some implementations and examples the A-IoT device 102 may be referred to as a tag). The biased distance *r1* is measured, but that includes the first bias range offset *b1* due to *d1*, among others. A charge delay time dc is the known charging time computed using a charging model (e.g., as described with reference to FIG. 1c) in the refinement ranging procedure 430, i.e., charging time of A-IoT device 102 from a second state such as, for example, zero or from a discharge state. The charge delay time dc and hence the second bias range offset *b2* can be computed by utilizing a known charge model as described with reference to FIG. 1c.

e. Reader 206: at 426, the reader 206 configures the activator 202 for the second refined ranging, using the selection 1.d.i-ii. As indicated at operation 426, the configuration transmitted by the reader 206 to the activator 202, used at 432, may comprise A) a selection of one or more resources for the second activation signal e.g. the best frequency resource and optionally the best AoD, and/or B) an informing of *r1* computed at operation 424, the distance from the reader to activator devices computed at least at operation 412, and the activator to reader device AoA 107 determined at least at operation 412.

The second key operation occurs in a second activation period, where a refined location procedure 430 is used to obtain the second range information *r2*, where such information contains a known second bias estimate or second bias range offset *b2* based on a known A-IoT device 102 charging delay. The refined ranging procedure 430 has the following steps a. to b., with reference to FIGs. 1a to 1e, of:

a. Activator device 104: at operation 434, the activator device 104 transmits an activation signal on the resources as configured by the reader device 106 (e.g., best frequency resource and/or best AoD) in step e. of the location calibration procedure 401. As indicated at operation 434, the second activation signal operation 434 is sent on the configured frequency and optionally the AoD from the configuration A) sent at operation 426. The A-IoT device, after charging from the second state to power level *Pf,* responds by transmitting a second reply signal on the configured frequency in operation 436.

b. Reader device 106: the reader device 106, using the A-IoT device's second reply signal transmitted in operation 436, performs in operation 440, based on an implementation, obtains second ranging information $r2 \approx a + d + b2$ (e.g., see FIGs 1a to 1e) where $b2 = dc*c$ is the second bias range offset, which is still not known, however, the total charge time $dc$ is now initiated from the second state, which is a known state of the A-IoT device 102 (i.e., a fully discharged state). As indicated at 438, the reader device 106 receives from A-IoT device 102 the second reply signal in operation 436 on the configured frequency and based on the selected AoA determined at least at operation 424. The reader device 106 uses the first ranging information $r1$ measured during step c. of the calibration procedure 401, the space resources measured during step d of the calibration procedure 401, the A-IoT device 102 charge profile obtained at step a. ii) of the calibration procedure 401, and the second ranging information $r2$ measured at step b of the refined location procedure 430 to compute the distances $a$ 101 and $d$ 103 to the A-IoT device 102 in operation 442 and also computes the A_IoT device's 102 first bias range offset $b1$ and hence charge delay $d1$ as described with reference to FIG. 1c.

In operation 444 the reader device 106 transfers location information including data representative of the distances $a$ 101 and $d$ 103, and optionally the first bias range offset $b1$ or initial charge delay $d1$ to either the activator device 104 (e.g., UE 204), the NR NW and/or other network elements (e.g., gNB 208, LMF 210, a RAN node or other network element(s)) itself. With the location information transferred at 444, the activator device 104 can now locate the A-IoT device 102 (or the tag) and/or provide the location information to the NW (e.g., LMF 210) via gNB 208 for use in locating the A-IoT device 102 (or the tag). The initial charge delay $d1$ or first unknown bias range offset / first bias range offset $b1$ is optional and may be used as an indication that some other device attempted - voluntary or not to charge the A-IoT device 102 (or the tag).

Although FIGS. 1a to 4 described and/or made reference to locating an A-IoT device 102, this was by way of example only and it is not so limited, it is to be appreciated by the skilled person that the methods, systems, apparatus, signal flows, and/or processes as described with reference to FIGS. 1a to 4 are applicable to, without limitation, for example any type of passive radio apparatus 102 or A-IoT device 102, hybrid A-IoT device, hybrid radio devices such as semi-passive radio device including the passive radio apparatus or componentry and an active radio, a RF tag or tag, and/or any other communication device or network element including the functionality of a passive radio apparatus 102; combinations thereof, modifications thereto, as herein described and/or as the application demands.

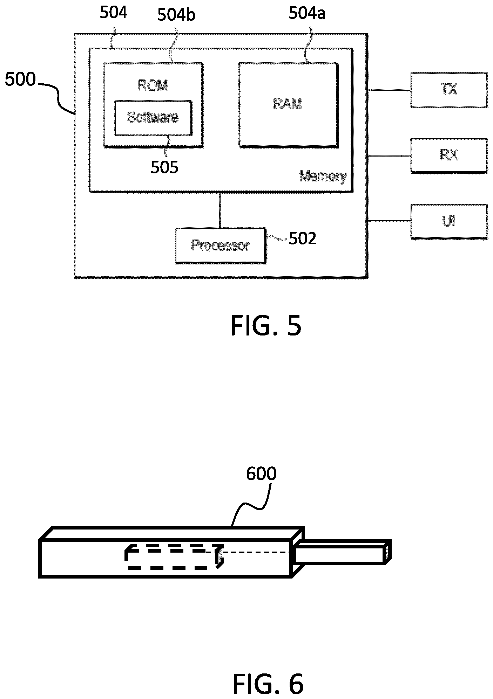

FIG. 5 shows an apparatus 500 according to some example embodiments, which may comprise the user equipment or base station as described herein. The apparatus may be configured to perform the operations described herein, for example operations described with reference to any disclosed process. The apparatus comprises at least one processor 502 and at least one memory 504 directly or closely connected to the processor 502. The memory 504 includes at least one random access memory (RAM) 504a and at least one read-only memory (ROM) 504b. Computer program code (software) 505 is stored in the ROM 504b. The apparatus may be connected to a transmitter (TX) and a receiver (RX). The apparatus may, optionally, be connected with a user interface (UI) for instructing the apparatus and/or for outputting data. The at least one processor 502, with the at least one memory 504 and the computer program code 505 are arranged to cause the apparatus to at least perform at least the method according to any preceding process, for example as disclosed in relation to the flow diagrams of FIGs. 1a to 1e and related features thereof, the signal flow diagrams of FIGs. 3a to 4 and related features thereof, and/or as disclosed in relation to FIGs. 1a to 1e and 2a to 2c and related features thereof.

FIG. 6 shows a non-transitory media 600 according to some embodiments. The non-transitory media 600 is a computer readable storage medium. It may be e.g., a compact disc (CD), a digital versatile disc (DVD), a universal serial bus (USB) stick, a blue ray disk, Secure Digital (SD) Card, etc. The non-transitory media 600 stores computer program code, causing an apparatus to perform the method of any preceding process for example as disclosed in relation to the flow diagrams, signal flow diagrams and related features thereof.

Names of network elements, protocols, and methods are based on current standards. In other versions or other technologies, the names of these network elements and/or protocols and/or methods may be different, as long as they provide a corresponding functionality. For example, embodiments may be deployed in 2G/3G/4G/5G and/or 6G and beyond networks and further generations of 3GPP but also in non-3GPP radio networks such as WiFi.

A memory may be volatile or non-volatile. It may be e.g., a RAM, a SRAM, a flash memory, a FPGA block ram, a SD, a DVD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above-described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

**Claims**

1. A user equipment (104, 204) comprising:

   at least one processor (502); and
   at least one memory (504) storing instructions that, when executed by the at least one processor, cause the user equipment to at least perform:

   transmitting (152), from the user equipment, a first activation signal to a passive radio apparatus (102);
   receiving (154), at the user equipment, an indication for transmitting a second activation signal;
   transmitting (156), from the user equipment, the second activation signal to the passive radio apparatus; and
   receiving (158), at the user equipment, location information related to at least one of a distance between the user equipment and the passive radio apparatus and a distance between a reader device (106, 206) and the passive radio apparatus based at least partially on the second activation signal.

2. The user equipment of claim 1, further performing: the receiving (158) the location information further comprising receiving, at the user equipment, a first bias range offset associated with at least charging the passive radio apparatus based at least partially on the first activation signal.

3. The user equipment of claims 1 or 2, wherein:

   the reader device (106, 206) is at least part of the user equipment (104, 204);
   the reader device (106, 206) is at least part of another one or more user equipment (206, 206a-206n), and wherein receiving (154) the indication for transmitting the second activation signal, and receiving (158) the location information is received from the another one or more user equipment; or
   the reader device (106, 206) is at least part of another one or more user equipment (206, 206a-206n), and wherein the receiving (154) the indication for transmitting the second activation signal, and the receiving (158) the location information is received from a base station (208) or network element (210) serving the user equipment (204) and the another one or more user equipment (206, 206a-206n).

4. The user equipment of any preceding claim, wherein:

   the transmitting (152), from the user equipment, the first activation signal to the passive radio apparatus (102) is for at least charging the passive radio apparatus from a first state in a first activation period; and
   the receiving (154), at the user equipment, an indication for transmitting a second activation signal is for at least charging the passive radio apparatus from a second state in a second activation period; and
   wherein the location information related to at least one of the distance between the user equipment (204) and the passive radio apparatus (102), and the distance between the reader device (106, 206) and the passive radio apparatus is determined at least partially based on a time the passive radio apparatus takes to charge from a first state and/or second state before transmitting a reply signal in response to the first activation signal and/or the second activation signal.

5. The user equipment of any of claim 4, wherein:

   the first state comprises an unknown charged state of the passive radio apparatus; and
   the second state comprises a known charged state or a fully discharged state of the passive radio apparatus.

6. The user equipment of any preceding claim, prior to the transmitting (152) the first activation signal, further performing: transmitting (400), from the user equipment (104, 204) to the reader device (106, 206), information related to at least one of:

an indication of a two-stage ranging procedure;

a charging time model of the passive radio apparatus (102) for when the passive radio apparatus collects energy from the first activation signal and second activation signal; and

a request for the reader device (106, 206) to measure the first activation signal, the measurement of the first activation signal comprising information related to a distance between the user equipment and the reader device.

7. The user equipment of any preceding claim, further performing: the receiving (154) the indication further comprising receiving, at the user equipment, a configuration comprising at least one resource configured to be used for transmission of the second activation signal to the passive radio apparatus, based at least partially on the first activation signal, wherein the at least one resource of the configuration comprises at least one of:

a time for transmission of the second activation signal;

a frequency used for transmission of the second activation signal; and

an angle of departure for transmission of second activation signal.

8. A user equipment (206) comprising:

at least one processor (502); and

at least one memory (504) storing instructions that, when executed by the at least one processor (502), cause the user equipment (206) to at least perform:

receiving (132), from an activator device, a first activation signal directed towards a passive radio apparatus;

receiving (134), from the passive radio apparatus, at least one first initial reply signal in relation to the first activation signal;

transmitting (136) an indication for transmitting a second activation signal;

receiving (138), from said activator device, the second activation signal directed towards the passive radio apparatus;

receiving (138), from the passive radio apparatus, at least one second initial reply signal in relation to the second activation signal;

determining (140), based at least partially on at least one second initial reply signal received from the passive radio apparatus, location information related to at least one of a distance between the activator device and the passive radio apparatus, and a distance between the user equipment and the passive radio apparatus; and

transmitting (142) the location information related to at least one of the distance between the activator device and the passive radio apparatus, and the distance between the user equipment and the passive radio apparatus.

9. The user equipment of claim 8, further performing: the transmitting (142) the location information further comprising transmitting a first bias range offset associated with at least charging of the passive radio apparatus based at least partially on the first activation signal.

10. The user equipment of claims 8 or 9, wherein:

the activator device (104, 204) is at least part of the user equipment (106, 206);

the activator device (104, 204) is at least part of another user equipment (204), and wherein transmitting (136) the indication for transmitting the second activation signal, and transmitting (142) the location information is transmitted to the another user equipment (204); or

the activator device (104, 204) is at least part of another user equipment (204), and wherein transmitting (136) the indication for transmitting the second activation signal, and transmitting (142) the location information is transmitted from a base station (208) or network element (210) serving the user equipment (206) and the another user equipment (204).

11. The user equipment of any of claims 8 to 10, wherein performing the determining (140) of the location information further comprising performing:

measuring (132) first ranging information comprising a sum of at least partially: the distance between the user equipment and the passive radio apparatus, the distance between the reader device and the passive radio apparatus, and a first bias range offset of the passive radio apparatus, the first bias range offset determined based on a time the passive radio apparatus takes to charge from a first state using the first activation signal;

measuring (138) second ranging information comprising a sum of at least partially: the distance between the user equipment and the passive radio apparatus, the distance between the reader device and the passive radio apparatus, and a second bias range offset of the passive radio apparatus, the second bias range offset determined based on a time the passive radio apparatus takes to charge from a second state using the second activation signal; and

determining (140a) the location information based on the measured first and second ranging information.

12. The user equipment of any of claims 8 to 11, further comprising performing:

determining, prior to transmitting (136) the indication, that the passive radio apparatus is in the second state or fully discharged after a plurality of first reply signal transmissions in response to the first activation signal ceases.

13. The user equipment of any of claims 8 to 12, further comprising performing:

determining at least one resource to be used for transmission of at least one second activation signal to a passive radio apparatus, based at least partially on the at least one first initial reply;

transmitting, from the user equipment, a configuration comprising the at least one resource; and

wherein the at least one second initial reply from the passive radio apparatus is in response to the second activation signal sent based on the configuration; and

wherein the at least one resource of the configuration comprises at least one of:

a time for transmission of the second activation signal,
a frequency used for transmission of the second activation signal, or
an angle of departure for transmission of second activation signal.

14. A method for a user equipment (204) comprising:

transmitting (152), from the user equipment, a first activation signal to a passive radio apparatus for charging the passive radio apparatus;

receiving (154), at the user equipment, an indication for transmitting a second activation signal;

transmitting (156), from the user equipment, the second activation signal to the passive radio apparatus; and

receiving (158), at the user equipment, location information related to at least one of a distance between the user equipment and the passive radio apparatus and a distance between a reader device and the passive radio apparatus based at least partially on the second activation signal.

15. A method for a user equipment (206) comprising:

receiving (132), from an activator device, a first activation signal directed towards a passive radio apparatus;

receiving (134), from the passive radio apparatus, at least one first initial reply signal in relation to the first activation signal;

transmitting (136), from the user equipment, an indication for transmitting a second activation signal;

receiving (138), from said activator device, the second activation signal directed towards the passive radio apparatus for recharging the passive radio apparatus;

receiving (138), from the passive radio apparatus, at least one second initial reply signal in relation to the second activation signal;

determining (140), based at least partially on at least one second initial reply signal received from the passive radio apparatus, location information related to at least one of a distance between the activator device and the passive radio apparatus, and a distance between the user equipment and the passive radio apparatus; and

transmitting (142), from the user equipment, the location information related to at least one of the distance between the activator device and the passive radio apparatus, and the distance between the user equipment and the passive radio apparatus.

**FIG. 1a**

**FIG. 1b**

FIG. 1c

EP 4 488 707 A1

130

Receiving first activation signal from activator device and measuring the distance or range between activator device and reader device in a first activation period /132

Receiving reply signal(s) emitted from the A-IoT device in response to first activation signal, and measuring a first biased range (r1) between activator device, A-IoT device, and reader device with first bias range offset /134

Sending an indication to the activator device that the A-IoT device has discharged /136

Receiving reply signal(s) emitted from the A-IoT device in response to second activation signal transmitted in a second activation period, and measuring a second biased range (r2) between activator device, A-IoT device, and reader device with second bias range offset /138

Determining location estimates for distances *a* and *d* based on the two biased ranges r1 and r2 and the first and second bias range offsets /140

┌─────────────────────────────────────────────┐
¦ Perform ranging calculation at the reader device using a /140a
¦ specified model ¦
└─────────────────────────────────────────────┘

┌─────────────────────────────────────────────┐
¦ Transmit at least the two biased ranges r1 and r2 and ¦
¦ the second bias range offset to a network device for /140b
¦ performing ranging calculation using a specified model ¦
└─────────────────────────────────────────────┘

Transmit location estimates for ranges or distances *a* and *d* and/or first/second bias range offset(s) to the activator device /142

FIG. 1d

150

Transmitting a set of one or more first activation signals
to an A-IoT device in a first activation period ⟶ 152

Receiving an indication from a reader device the A-IoT
device is in a second state ⟶ 154

Transmitting a set of one or more second activation
signals to an A-IoT device in a second activation
period ⟶ 156

Receiving location estimates for ranges or distances $a$
and $d$ and/or first/second bias range offset(s) ⟶ 158

FIG. 1e

FIG. 2a

FIG. 2b

FIG. 2c

FIG. 3a

320

204/206

301

UE₁

102

A-IoT

322

323

Charge to Pf

326a

325

Transmit until
discharged

326m

Calc first bias range r1        327

332

333

Charge to Pf

336a

Transmit until
discharged

336m

335

Calc second bias range r2,
combine r1 & r2 compute *a*,        337
and first bias range offset

311

FIG. 3b

FIG. 3c

FIG. 4

**FIG. 5**

**FIG. 6**

Europäisches
Patentamt

European
Patent Office

Office européen
des brevets

# EUROPEAN SEARCH REPORT

Application Number

EP 24 18 4562

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/020279 A1 (MARKHOVSKY RUSS [US] ET AL) 27 January 2005 (2005-01-27) | 1,14 | INV.<br>G01S5/02 |
| Y | * fig. 4A; par. 116-127 * | 1-15 | G01S13/76 |
| | - - - - - | | |
| Y | NOKIA ET AL: "Ambient IoT positioning", 3GPP DRAFT; RP-230862, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE<br>,<br>vol. RAN WG1, no. Taipei; 20230612 - 20230614<br>2 June 2023 (2023-06-02), XP052498963,<br>Retrieved from the Internet:<br>URL:https://ftp.3gpp.org/tsg_ran/TSG_RAN/T SGR_100/Docs/RP-230862.zip RP-230862 Ambient IoT positioning.docx<br>[retrieved on 2023-06-02]<br>* fig. 2; p. 4 "4 Ranging aspects", "proposal 5" * | 1-15 | |
| | - - - - - | | TECHNICAL FIELDS SEARCHED (IPC) |
| E | WO 2024/184726 A1 (NOKIA TECHNOLOGIES OY [FI]) 12 September 2024 (2024-09-12)<br>* the whole document * | 1-15 | G01S |
| | - - - - - | | |

The present search report has been drawn up for all claims

| Place of search | Date of completion of the search | Examiner |
|---|---|---|
| Munich | 29 November 2024 | González Moreno, J |

EPO FORM 1503 03.82 (P04C01)

**ANNEX TO THE EUROPEAN SEARCH REPORT**
**ON EUROPEAN PATENT APPLICATION NO.**

EP 24 18 4562

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2024

| Patent document cited in search report | Publication date | Patent family member(s) | Publication date |
|---|---|---|---|
| US 2005020279 A1 | 27-01-2005 | NONE | |
| WO 2024184726 A1 | 12-09-2024 | NONE | |

EPO FORM P0459

For more details about this annex : see Official Journal of the European Patent Office, No. 12/82